# EUROPEAN PATENT APPLICATION

(11) **EP 4 496 355 A1**
(43) Date of publication of application: **22.01.2025**
(21) Application number: 23787420.1
(22) Date of filing: 03.03.2023
(51) Int. Cl.: H04W 4/029

(54) **COMMUNICATION METHOD AND RELATED APPARATUS**

(30) Priority: 14.04.2022 CN 202210392021
(71) Applicant: Huawei Technologies Co., Ltd., Shenzhen, Guangdong 518129 (CN)
(72) Inventor: ZHU, Fangyuan, Shenzhen, Guangdong 518129 (CN); LI, Yan, Shenzhen, Guangdong 518129 (CN); LI, Meng, Shenzhen, Guangdong 518129 (CN)
(74) Representative: Thun, Clemens
(86) International application number: PCT/CN2023/079450
(87) International publication number: WO 2023/197772

(57) **Abstract**

A communication method and a related apparatus are provided. The method includes: When a cell accessed by a terminal device is a cell of a mobile relay, a core network device determines location information of the terminal device based on location information of the mobile relay. In a design, after determining that the cell accessed by the terminal device is a cell of the mobile relay, the core network device serving the terminal device requests the location information of the mobile relay from a first access network device currently accessed by the mobile relay, and determines the location information of the terminal device based on the received location information of the mobile relay. In another design, after determining that the cell accessed by the terminal device is a cell of the mobile relay, a first access network device proactively reports current location information of the mobile relay to the core network device serving the terminal device, so that the core network device determines the location information of the terminal device based on the location information of the mobile relay. This resolves a problem that cell information of the mobile relay may not match an actual geographical location of the terminal device.

## Description

This application claims priority to Chinese Patent Application No. 202210392021.7, filed with the China National Intellectual Property Administration on April 14, 2022 and entitled "COMMUNICATION METHOD AND RELATED APPARATUS", which is incorporated herein by reference in its entirety.

### TECHNICAL FIELD

This application relates to the communication field, and in particular, to a communication method and a related apparatus.

### BACKGROUND

With development of communication technologies, relay devices are widely used. In research of a fifth generation mobile communication system (fifth generation, 5G) new radio (new radio, NR), an integrated access and backhaul (integrated access and backhaul, IAB) node that integrates a wireless access link and a wireless backhaul link is proposed. The IAB node accesses a base station serving the IAB node, through a radio interface in a manner similar to that of a terminal. The base station is referred to as a donor base station (donor base station). A radio interface link between the IAB node and the donor base station is referred to as a backhaul link (backhaul link). The IAB node provides functions and services similar to those of a common base station for a terminal accessing a cell of the IAB node. A communication link between the IAB node and the terminal is referred to as an access link (access link). Usually, the IAB node is fixed on the ground or in a building, and does not have mobility. After a terminal device accesses the IAB node at the fixed location, a network may determine a location of the terminal device based on cell information of the IAB node. However, more mobile relays are widely used. For example, the mobile relay may be a vehicle-mounted relay (vehicle-mounted relay, VMR) mounted on a vehicle. Application of the mobile relay enables a terminal device located inside or around the vehicle to access the network by connecting to the mobile relay. It may be understood that a VMR node is an IAB node having a mobility capability.

Generally, cell information of the mobile relay is configured by an operation, administration, and maintenance (operation, administration, and maintenance, OAM) device. When the mobile relay moves, the cell information of the mobile relay may remain unchanged or cannot be updated in time. As a result, the cell information of the mobile relay cannot match a current geographical location. Therefore, after the terminal device is connected to the mobile relay, the cell information of the mobile relay may no longer accurately represent an actual location of the terminal device. For example, the management device configures a fixed tracking area code (tracking area code, TAC) for the cell of the mobile relay, for example, a TAC #1. The mobile relay is located at a first location, and the TAC included in a broadcast message sent by the mobile relay is the TAC #1. When the mobile relay moves from the first location to a second location, the TAC of the mobile relay does not change, and the TAC included in the broadcast message sent by the mobile relay is still the TAC #1. For the terminal accessing the mobile relay, the TAC of the mobile relay accessed by the terminal remains the TAC #1. Therefore, even if the mobile relay has moved to the second location, the network side may still consider that the mobile relay is at the first location, and then determine that the terminal accessing the mobile relay is also near the first location. It can be seen that, configuring a fixed TAC for the mobile relay may cause the network side to determine incorrect location information for the terminal accessing the mobile relay.

Therefore, there is an urgent need for a method that can enable the network side to determine accurate location information of the terminal connected to the mobile relay.

### SUMMARY

This application provides a communication method and a related apparatus, to enable a network side to determine accurate location information of a terminal connected to a mobile relay.

According to a first aspect, this application provides a communication method. The method may be performed by a core network device, or may be performed by a component (for example, a chip or a chip system) configured in a core network device, or may be implemented by a logical module or software that can implement all or a part of functions of a core network device. This is not limited in this application.

The core network device is a core network device serving a terminal device.

For example, the method includes: determining that a first cell accessed by the terminal device is a cell of a mobile relay; sending a first message to a first access network device, where the first message carries first information, the first message is used to request the first access network device to report location information of the mobile relay, the first information is used by the first access network device to determine the mobile relay, and the mobile relay is configured to provide a relay service between the terminal device and the first access network device; receiving first location information of the mobile relay from the first access network device, where the first location information includes a tracking area code (tracking area code, TAC) and/or a cell identifier (cell identifier, Cell ID) corresponding to a second cell currently accessed by the mobile relay, and the second cell is a cell of the first access network device; and determining location information of the terminal device based on the first location information of the mobile relay.

Based on the foregoing technical solution, after determining that a cell accessed by the terminal device is a cell of the mobile relay, the core network device requests the location information of the mobile relay from an access network device currently accessed by the mobile relay, and after receiving current location information of the mobile relay from the access network device, determines the location information of the terminal device based on the location information of the mobile relay, where the location information of the mobile relay includes a TAC and/or a cell ID corresponding to a cell of the access network device currently accessed by the mobile relay. The core network device determines the location information of the terminal device based on the obtained location information of the mobile relay. This application provides a method for obtaining the location information of the terminal device in a scenario in which the terminal device accessing the mobile relay moves, to resolve a problem that cell information of the mobile relay accessed by the terminal device does not match a current actual location of the terminal device. In other words, although the cell information of the mobile relay cannot reflect the actual location information of the terminal device, the core network device can also accurately determine the actual location of the terminal device.

The core network device determines that the first cell accessed by the terminal device is a cell of the mobile relay. In a possible implementation, the core network device receives information about the first cell from the first access network device, where the information about the first cell includes a TAC and/or a cell ID corresponding to the first cell; and determines, based on prestored configuration information and the information about the first cell, that the first cell is a cell of the mobile relay, where the configuration information includes the cell information of the mobile relay, the cell information includes a TAC and/or a cell ID, and the cell information of the mobile relay includes the information about the first cell.

In another possible implementation, the core network device receives second information from the first access network device or the terminal device, where the second information indicates that a cell accessed by the terminal device is a cell of the mobile relay.

The core network device may determine, in any one of the foregoing possible implementations, that the first cell accessed by the terminal device is a cell of the mobile relay, that is, the terminal device accesses the mobile relay. This application provides a plurality of implementations of determining that the first cell accessed by the terminal device is a cell of the mobile relay, thereby improving flexibility. It should be noted that, in this application, the determining that the first cell accessed by the terminal device is a cell of the mobile relay has a same meaning as determining that the first cell accessed by the terminal device is a cell having mobility.

With reference to the first aspect, in some possible implementations of the first aspect, the method further includes: receiving second location information of the mobile relay from a second access network device, where the second location information includes a TAC and/or a cell ID corresponding to a third cell accessed by the mobile relay, and the third cell is a cell of the second access network device; and determining, based on the received second location information, that a location of the terminal device changes.

When the mobile relay moves (the terminal device moves along with the mobile relay), for example, the mobile relay is handed over from the first access network device to the second access network device, in other words, the mobile relay accesses a cell of the second access network device, the core network device may receive the second location information of the mobile relay from the second access network device, to accurately determine current location information of the terminal device based on the current second location information of the mobile relay. In addition, the core network device may further determine, based on the second location information and the first location information, that the location of the terminal device changes.

According to a second aspect, this application provides a communication method. The method may be performed by a first access network device, or may be performed by a component (for example, a chip or a chip system) configured in a first access network device, or may be implemented by a logical module or software that can implement all or a part of functions of a first access network device. This is not limited in this application.

The first access network device is an access network device currently accessed by a mobile relay.

For example, the method includes: receiving a first message from a core network device, where the core network device serves a terminal device, the first message carries first information, the first message is used to request the first access network device to report location information of the mobile relay, the first information is used by the first access network device to determine the mobile relay, the location information of the mobile relay is used by the core network device to determine location information of the terminal device, and the mobile relay is configured to provide a relay service between the terminal device and the first access network device; and sending first location information of the mobile relay to the core network device based on the first message, where the first location information includes a TAC and/or a cell ID corresponding to a second cell currently accessed by the mobile relay, and the second cell is a cell of the first access network device.

Based on the foregoing technical solution, after receiving the first message from the core network device, the first access network device reports the first location information of the mobile relay, to be specific, reports the TAC and/or the cell ID corresponding to the second cell currently accessed by the mobile relay, so that the core network device determines the location information of the terminal device based on the location information of the mobile relay. The location information of the terminal device is determined by using the location information of the mobile relay. This application provides a method for obtaining the location information of the terminal device in a scenario in which the terminal device accessing the mobile relay moves, to resolve a problem that cell information of the mobile relay accessed by the terminal device does not match a current actual location of the terminal device. In other words, although the cell information of the mobile relay cannot reflect the actual location information of the terminal device, the core network device can also accurately determine the actual location of the terminal device.

With reference to the second aspect, in some possible implementations of the second aspect, the method further includes: sending context information of the mobile relay to a second access network device, where the second access network device is an access network device after the mobile relay is handed over, and the context information of the mobile relay includes an identifier of the core network device.

When the mobile relay moves and is handed over from the first access network device to the second access network device, it may be considered that the terminal device moves along with the mobile relay, and the first access network device sends the context information of the mobile relay to the second access network device, to trigger the second access network device to report current location information of the mobile relay, that is, location information after the movement, so that the core network device can obtain the current location information of the mobile relay.

With reference to the first aspect and the second aspect, in some possible implementations, the first information includes one or more of the following: an identifier of the mobile relay; a TAC corresponding to a first cell, where the first cell is a cell of the mobile relay accessed by the terminal device; or a cell ID of the first cell.

The first message sent by the core network device carries the first information, and the first information may be used to determine a mobile relay, to be specific, the first access network device may determine, based on the first information, a mobile relay whose location information is to be reported. The first information may include one or more of the identifier of the mobile relay, the TAC corresponding to the first cell, or the cell ID of the first cell, and the first access network device may determine, based on any of the foregoing information, a mobile relay whose location information needs to be reported.

With reference to the first aspect and the second aspect, in some possible implementations, the first message further carries one or more of the following: a reporting periodicity of the location information of the mobile relay, a location information type of the mobile relay, or an identifier of the core network device, and the location information type of the mobile relay includes a TAC and/or a cell ID of a cell accessed by the mobile relay.

The core network device may further indicate the reporting periodicity of the location information of the mobile relay to the first access network device, in other words, how often the location information of the mobile relay is reported. The core network device may further indicate the location information type of the mobile relay to the first access network device, to be specific, whether the first access network device reports the TAC, or the cell ID, or both the TAC and the cell ID of the cell accessed by the mobile relay. The core network device may further indicate the identifier of the core network device to the first access network device, where the core network device is a core network device serving the terminal device, to be specific, a core network device to which the location information of the mobile relay is reported needs to be indicated to the first access network device.

According to a third aspect, this application provides a communication method. The method may be performed by a first access network device, or may be performed by a component (for example, a chip or a chip system) configured in a first access network device, or may be implemented by a logical module or software that can implement all or a part of functions of a first access network device. This is not limited in this application.

The first access network device is an access network device currently accessed by a mobile relay.

For example, the method includes: determining that a first cell accessed by a terminal device is a cell of a mobile relay; and sending first location information of the mobile relay to a core network device serving the terminal device, where the first location information includes a TAC and/or a cell ID corresponding to a second cell currently accessed by the mobile relay, the first location information of the mobile relay is used by the core network device to determine location information of the terminal device, the mobile relay is configured to provide a relay service between the terminal device and the first access network device, and the second cell is a cell of the first access network device.

Based on the foregoing technical solution, after determining that a cell accessed by the terminal device is a cell of the mobile relay, the first access network device proactively reports current location information of the mobile relay to the core network device serving the terminal device, so that the core network device determines the location information of the terminal device based on the current location information of the mobile relay, where the location information includes a TAC and/or a cell ID corresponding to a cell of the first access network device currently accessed by the mobile relay. This application provides a method for obtaining the location information of the terminal device in a scenario in which the terminal device accessing the mobile relay moves, to resolve a problem that cell information of the mobile relay accessed by the terminal device does not match a current actual location of the terminal device. In other words, although the cell information of the mobile relay cannot reflect the actual location information of the terminal device, the core network device can also accurately determine the actual location of the terminal device.

The first access network device determines that the cell accessed by the terminal device is a cell of the mobile relay. In a possible implementation, the first access network device determines, based on prestored configuration information and information about the first cell, that the first cell is a cell of the mobile relay, where the information about the first cell includes a TAC and/or a cell ID corresponding to the first cell, the configuration information includes the cell information of the mobile relay, the cell information includes a TAC and/or a cell ID, and the cell information of the mobile relay includes the information about the first cell.

In another possible implementation, the first access network device receives first indication information from the mobile relay or the terminal device, where the first indication information indicates that the first cell is a cell having mobility, and/or the mobile relay has mobility.

The first access network device may determine, in any one of the foregoing possible implementations, that the first cell accessed by the terminal device is a cell of the mobile relay, that is, the terminal device accesses the mobile relay. This application provides a plurality of implementations of determining that the first cell accessed by the terminal device is a cell of the mobile relay, thereby improving flexibility.

With reference to the third aspect, in some possible implementations of the third aspect, the method further includes: determining a reporting periodicity and/or a reporting condition of the location information of the mobile relay, where the reporting condition includes that a cell accessed by the mobile relay changes from the second cell to a third cell, the second cell and the third cell are cells of the first access network device, and the TAC and/or the cell ID of the second cell are/is different from a TAC and/or a cell ID of the third cell.

The first access network device may determine the reporting periodicity of the location information of the mobile relay, in other words, how often the location information is reported. In addition, the first access network device may further set the reporting condition, for example, a TAC and/or a cell ID of a cell accessed by the mobile relay changes. When the foregoing condition is met, the first access network device may be triggered to proactively report the current location information of the mobile relay.

Optionally, when the cell accessed by the mobile relay changes from the second cell to the third cell, the method further includes: sending the TAC and/or the cell ID corresponding to the third cell to the core network device.

With reference to the third aspect, in some possible implementations of the third aspect, the sending first location information of the mobile relay to a core network device serving the terminal device includes: sending an N2 message to the core network device, where the N2 message includes the first location information.

The first access network device may include the first location information of the mobile relay in the N2 message, and send the N2 message to the core network device, so that the core network device obtains the location information of the mobile relay.

With reference to the third aspect, in some possible implementations of the third aspect, the method further includes: sending context information of the mobile relay to a second access network device, where the second access network device is an access network device after the mobile relay is handed over, and the context information of the mobile relay includes an identifier of the core network device.

When the mobile relay moves and is handed over from the first access network device to the second access network device, it may be considered that the terminal device moves along with the mobile relay, and the first access network device sends the context information of the mobile relay to the second access network device, to trigger the second access network device to report current location information of the mobile relay, that is, location information after the movement, so that the core network device can obtain the current location information of the mobile relay.

According to a fourth aspect, this application provides a communication method. The method may be performed by a core network device, or may be performed by a component (for example, a chip or a chip system) configured in a core network device, or may be implemented by a logical module or software that can implement all or a part of functions of a core network device. This is not limited in this application.

The core network device is a core network device serving a terminal device.

For example, the method includes: receiving first location information of a mobile relay from a first access network device, where the first location information includes a TAC and/or a cell ID corresponding to a second cell currently accessed by the mobile relay, the second cell is a cell of the first access network device, the mobile relay is configured to provide a relay service between the terminal device and the first access network device, and a first cell accessed by the terminal device is a cell of the mobile relay; and determining location information of the terminal device based on the first location information of the mobile relay.

Based on the foregoing technical solution, after obtaining the first location information of the mobile relay reported by the first access network device, the core network device determines the location information of the terminal device based on the first location information of the mobile relay, where the location information includes a TAC and/or a cell ID corresponding to a cell of the first access network device currently accessed by the mobile relay. This application provides a method for obtaining the location information of the terminal device in a scenario in which the terminal device accessing the mobile relay moves, to resolve a problem that cell information of the mobile relay accessed by the terminal device does not match a current actual location of the terminal device. In other words, although the cell information of the mobile relay cannot reflect the actual location information of the terminal device, the core network device can also accurately determine the actual location of the terminal device.

With reference to the fourth aspect, in some possible implementations of the fourth aspect, the method further includes: receiving an N2 message from the first access network device, where the N2 message includes the first location information of the mobile relay.

With reference to the fourth aspect, in some possible implementations of the fourth aspect, the method further includes: receiving second location information of the mobile relay from the first access network device, where the second location information includes a TAC and/or a cell ID corresponding to a third cell currently accessed by the mobile relay, the third cell and the second cell are cells of the first access network device, and the TAC and/or the cell ID of the third cell are/is different from the TAC and/or the cell ID of the second cell.

With reference to the fourth aspect, in some possible implementations of the fourth aspect, the method further includes: receiving third location information of the mobile relay from a second access network device, where the third location information includes a TAC and/or a cell ID corresponding to a fourth cell currently accessed by the mobile relay, and the fourth cell is a cell of the second access network device.

When the mobile relay moves (the terminal device moves along with the mobile relay), for example, the mobile relay is handed over from the first access network device to the second access network device, in other words, the mobile relay accesses a cell of the second access network device, the core network device may receive current location information of the mobile relay from the second access network device, to accurately determine current location information of the terminal device based on the current location information of the mobile relay.

With reference to the third aspect and the fourth aspect, in some possible implementations, the N2 message further includes one or more of the following: a TAC corresponding to the first cell, a cell ID of the first cell, or a non-access stratum (non-access stratum, NAS) message of the terminal device.

According to a fifth aspect, this application provides a communication apparatus. The apparatus may implement the method according to any one of the first aspect and the possible implementations of the first aspect, or implement the method according to any one of the second aspect and the possible implementations of the second aspect, or implement the method according to any one of the third aspect and the possible implementations of the third aspect, or implement the method according to any one of the fourth aspect and the possible implementations of the fourth aspect. The apparatus includes a corresponding unit configured to perform the foregoing method. The unit included in the apparatus may be implemented by software and/or hardware.

According to a sixth aspect, this application provides a communication apparatus. The apparatus includes a processor. The processor is coupled to a memory, and may be configured to execute a computer program in the memory, to implement the method according to any one of the first aspect and the possible implementations of the first aspect, or implement the method according to any one of the second aspect and the possible implementations of the second aspect, or implement the method according to any one of the third aspect and the possible implementations of the third aspect, or implement the method according to any one of the fourth aspect and the possible implementations of the fourth aspect.

According to a seventh aspect, this application provides a computer-readable storage medium. The computer-readable storage medium stores a computer program or instructions. When the computer program or the instructions are executed, the method according to any one of the first aspect and the possible implementations of the first aspect is implemented, or the method according to any one of the second aspect and the possible implementations of the second aspect is implemented, or the method according to any one of the third aspect and the possible implementations of the third aspect is implemented, or the method according to any one of the fourth aspect or the possible implementations of the fourth aspect is implemented.

According to an eighth aspect, this application provides a computer program product. The computer program product includes instructions. When the instructions are run, the method according to any one of the first aspect and the possible implementations of the first aspect is implemented, or the method according to any one of the second aspect and the possible implementations of the second aspect is implemented, or the method according to any one of the third aspect and the possible implementations of the third aspect is implemented, or the method according to any one of the fourth aspect and the possible implementations of the fourth aspect is implemented.

According to a ninth aspect, this application provides a chip system. The chip system includes a processor, and may further include a memory, configured to implement the method according to any one of the first aspect and the possible implementations of the first aspect, or implement the method according to any one of the second aspect and the possible implementations of the second aspect, or implement the method according to any one of the third aspect and the possible implementations of the third aspect, or implement the method according to any one of the fourth aspect and the possible implementations of the fourth aspect. The chip system may include a chip, or may include a chip and another discrete component.

It should be understood that technical solutions of the fifth aspect to the ninth aspect of this application correspond to the technical solutions of the first aspect to the fourth aspect of this application, and beneficial effects achieved by the aspects and the corresponding feasible implementations are similar. Details are not described again.

### BRIEF DESCRIPTION OF DRAWINGS

FIG. 1 is a schematic of an IAB network architecture according to an embodiment of this application;
FIG. 2 is a schematic flowchart of communication based on an IAB technology according to an embodiment of this application;
FIG. 3 is a schematic of a network architecture based on a service-oriented architecture according to an embodiment of this application;
FIG. 4 is a schematic of a network architecture based on a point-to-point interface according to an embodiment of this application;
FIG. 5 is a schematic of a system architecture applicable to a method according to an embodiment of this application;
FIG. 6 is a schematic flowchart of a first communication method according to an embodiment of this application;
FIG. 7A and FIG. 7B are a detailed schematic flowchart of the communication method shown in FIG. 6 according to an embodiment of this application;
FIG. 8A and FIG. 8B are another detailed schematic flowchart of the communication method shown in FIG. 6 according to an embodiment of this application;
FIG. 9 is a schematic flowchart of a second communication method according to an embodiment of this application;
FIG. 10 is a detailed schematic flowchart of the communication method shown in FIG. 9 according to an embodiment of this application;
FIG. 11 is another detailed schematic flowchart of the communication method shown in FIG. 9 according to an embodiment of this application;
FIG. 12 is a block diagram of a communication apparatus according to an embodiment of this application;
FIG. 13 is another block diagram of a communication apparatus according to an embodiment of this application; and
FIG. 14 is a diagram of a structure of an access network device according to an embodiment of this application.

### DESCRIPTION OF EMBODIMENTS

The following describes technical solutions of this application with reference to the accompanying drawings.

The technical solutions provided in this application may be applied to various communication systems, such as a 5G mobile communication system or NR. The 5G mobile communication system may include non-standalone (non-standalone, NSA) networking and/or standalone (standalone, SA) networking.

The technical solutions provided in this application may be further applied to machine-type communication (machine-type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as a vehicle-to-X device (vehicle-to-X, V2X, X can stand for anything). For example, the V2X may include: vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

The technical solutions provided in this application may be further applied to a future communication system, for example, a sixth generation mobile communication system. This is not limited in this application.

Before the communication method provided in embodiments of this application is specifically described, network elements in this application are briefly described first.
1. A terminal device may be referred to as user equipment (user equipment, UE), an access terminal, a subscriber unit, a subscriber station, a mobile station, a mobile station, a remote station, a remote terminal, a mobile device, a user terminal, a terminal, a wireless communication device, a user agent, or a user apparatus.

The terminal device may be a device that provides voice/data connectivity for a user, for example, a hand-held device or an in-vehicle device with a wireless connection function. Currently, some examples of the terminal may be a mobile phone (mobile phone), a tablet computer (pad), a computer (for example, a laptop or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, another processing device, vehicle-mounted device, or wearable device connected to a wireless modem, a terminal device in a 5G network, or a terminal device in a future evolved public land mobile network (public land mobile network, PLMN).

In addition, the terminal device may alternatively be a terminal device in an IoT system. IoT is an important part of future information technology development. A main technical feature of the IoT is to connect things to a network by using a communication technology, to implement a smart network for human-machine interconnection and thing-thing interconnection. In an IoT technology, massive connections, deep coverage, and power saving of a terminal may be implemented by using, for example, a narrowband (narrowband, NB) technology.

In addition, the terminal device may alternatively include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

2. An access network (access network, AN) device may provide a network access function for an authorized user in a specific area, and can use transmission tunnels of different quality based on user levels, service requirements, and the like. The access network may be an access network using different access technologies. Currently, there are two types of radio access technologies: a 3rd generation partnership project (3rd generation partnership project, 3GPP) access technology (for example, a radio access technology used in a 3G, 4G, or 5G system) and a non-3GPP (non-3GPP) access technology. The 3GPP access technology is an access technology that complies with a 3GPP standard specification. For example, an access network device in the 5G system is referred to as a next generation node base station (next generation node base station, gNB). The non-3GPP access technology is an access technology that does not comply with the 3GPP standard specification, for example, an air interface technology represented by an access point (access point, AP) in wireless fidelity (wireless fidelity, Wi-Fi).

An access network that implements an access network function based on a wireless communication technology may be referred to as a radio access network (radio access network, RAN). The radio access network can manage radio resources, provide an access service for a terminal device, and further complete forwarding of a control signal and user data between the terminal and a core network.

For example, a radio access network device may include but is not limited to: a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an AP in a Wi-Fi system, a radio relay node, a radio backhaul node, a transmission point (transmission point, TP), a transmission and reception point (transmission and reception point, TRP), or the like. Alternatively, the radio access network device may be a gNB or a transmission point (TRP or TP) in a 5G (for example, NR) system, or one antenna panel or a group of antenna panels (including a plurality of antenna panels) of a base station in a 5G system. Alternatively, the radio access network device may be a network node constituting a gNB or a transmission point, for example, a baseband unit (BBU), a distributed unit (distributed unit, DU), a base station in a next-generation 6G communication system, or the like. A specific technology and a specific device form that are used by the radio access network device are not limited in this application. The radio access network device may include a gNB-central unit (central unit, CU) and a gNB-DU. The gNB-CU and gNB-DU are connected through an F1 interface. The CU is connected to a core network through a next generation (next generation, NG) interface. The gNB-DU includes a function of a physical layer (physical layer, PHY)/a medium access control (medium access control, MAC) layer/a radio link control (radio link control, RLC) layer, and is configured to provide an access service for a relay device connected to the access network device. The gNB-DU may be connected to the gNB-CU through the F1 interface. The gNB-DU may also be connected to a terminal device or a mobile termination (mobile termination, MT) functionality of a mobile relay through a Uu interface.

The gNB-CU is configured to perform radio resource control (radio resource control, RRC) on all relay devices and terminal devices under the gNB-CU, for example, may store contexts of the relay devices and the terminal devices. The gNB-CU may be connected to a DU functionality of another relay device through the F1 interface.

3. An IAB node (node) is proposed in 5G NR research. The IAB node integrates a wireless access link and a wireless backhaul link. The wireless access link is a communication link between a terminal device and the IAB node, and the wireless backhaul link is a communication link between IAB nodes, and is mainly used for data backhaul. After the IAB node is started, an MT functionality (functionality) of the IAB node accesses a network through cell selection. The IAB node does not need a wired transmission network for data backhaul. Therefore, the IAB node reduces a deployment requirement of the wired transmission network, and may be deployed in a scenario in which the wired transmission network is difficult to deploy, for example, an outdoor or indoor scenario. To understand the IAB node more clearly, the following describes in detail an IAB network architecture and a process of communication based on an IAB technology.

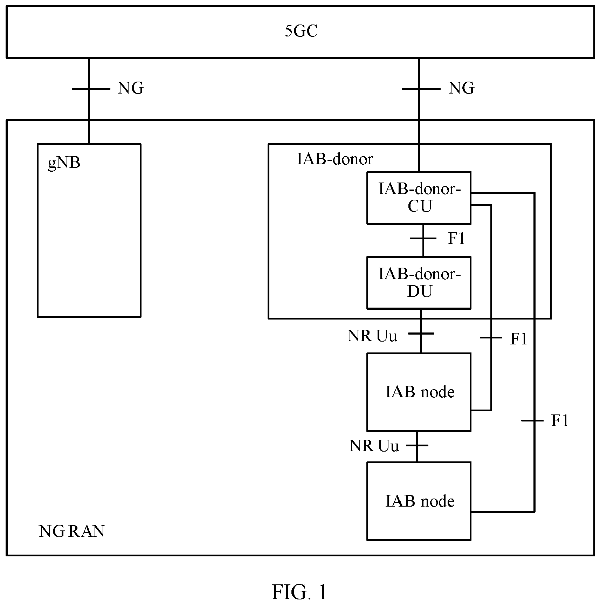

FIG. 1 is a schematic of an IAB network architecture according to an embodiment of this application. As shown in FIG. 1, a 5G core network (5G core, 5GC) and an NG RAN are included. The NG-RAN supports IAB by connecting an IAB node to a gNB that can serve the IAB node. The gNB is named an IAB-donor (donor). The IAB-donor includes one IAB-donor-central unit (central unit, CU) and one or more IAB-donor-DUs. The IAB node is connected to an upstream IAB node or the IAB-donor-DU via a mobile termination functionality (named an IAB-MT functionality of the IAB node) of an NR Uu interface. The IAB node provides wireless backhaul for a downstream IAB node and a terminal device via a network function (named an IAB-DU functionality of the IAB node) of the NR Uu interface. NG, NR Uu, and F1 in the figure are all logical interfaces, and functions of these interfaces are not described here. The IAB node may include two parts: an MT and a DU. The MT is similar to a function of UE, and communicates with a parent node through a Uu interface to provide data backhaul. The DU of the IAB node is similar to a function of the DU in the gNB, and includes a function of a PHY/MAC/RLC layer. The DU communicates with a child node, and provides an access service for the child node.

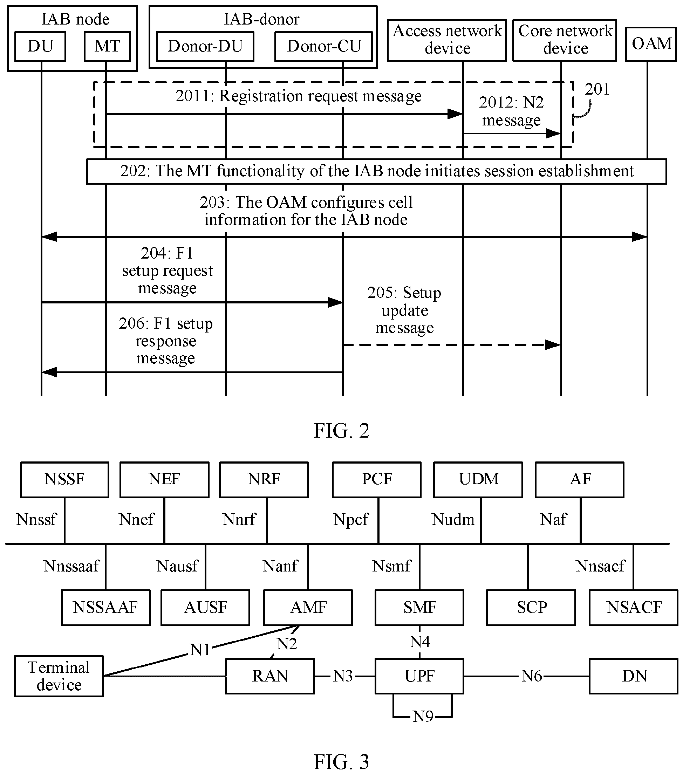

FIG. 2 is a schematic flowchart of communication based on an IAB technology according to an embodiment of this application.

Step 201: An IAB node registers with a network.

The IAB node may initiate a registration process by using an access network device to implement network access. For example, an MT functionality of the IAB node accesses the network through cell selection. Specifically, step 201 includes step 2011 and step 2012.

Step 2011: The MT functionality of the IAB node sends a registration request message to the access network device. Correspondingly, the access network device receives the registration request message.

The MT functionality of the IAB node sends the registration request message to the access network device. After receiving the registration request message, the access network device may select a core network device for the MT functionality of the IAB node.

Step 2012: The access network device sends the registration request message to the selected core network device. For example, the registration request message may be sent to the core network device via an N2 message. The registration request message may indicate that it is the IAB node that requests to register with the network. In this process, an initial access process of the IAB node is the same as that of a conventional terminal device.

Step 202: The MT functionality of the IAB node initiates session establishment.

The MT functionality of the IAB node initiates the session establishment, so that the core network device allocates an internet protocol (internet protocol, IP) address to the MT functionality of the IAB node, and the MT functionality of the IAB node interacts with an OAM by using the IP address.

Step 203: The OAM configures cell information for the IAB node, for example, a cell identifier and a TAC. It should be noted that, in this embodiment of this application, the cell information configured by the OAM for the IAB node is fixed. In other words, regardless of where the IAB node moves, the cell information of the IAB node does not change, in other words, the cell information of the IAB node is irrelevant to a geographical location of the IAB node.

Step 204: A DU functionality of the IAB node sends an F1 setup request (setup request) message to a donor-CU.

After selecting a proper donor radio access network (donor RAN) device, the DU functionality of the IAB node sends the F1 setup request message to the donor-CU, where the F1 setup request message carries the cell information supported by the donor-CU, for example, the cell identifier and the TAC. After receiving the F1 setup request message, the donor-CU activates the cell of the IAB node.

The donor RAN in step 204 may be the same as or different from the access network device in step 201. This is not limited.

Step 205: The donor-CU may send a setup update message to the core network device. Specifically, the donor-CU may send the setup update message to the core network device through a setup update process.

Step 206: The donor-CU sends an F1 setup response (setup response) message to the DU functionality of the IAB node. The F1 setup response message carries information about a cell to be activated(cells to be activated list), where the information about the activated cell includes a cell identifier of the activated cell.

It should be understood that, in this embodiment of this application, that an IAB node registers with a network has a same meaning as that the MT functionality of the IAB node registers with the network. In other words, unless otherwise specified, the description of an action executed by the MT functionality of the IAB node may be replaced with an action executed by the IAB node.

It should be further understood that for specific content of a process of registering with the network, reference may be made to an existing process of network access by a terminal device. For brevity, details are not described herein again.

4. A mobile relay is a radio access network device that integrates a wireless access link and a wireless backhaul link and that has mobility. The wireless access link is a communication link between a terminal device and the mobile relay, the wireless backhaul link is a communication link between the mobile relay and a radio access network device that is deployed on the ground and that has no mobility, and the wireless backhaul link is mainly used for data backhaul. The mobile relay supports interfaces such as Uu, F1, E1, NG, and X2, and includes a function of a radio access network device and an MT functionality. The MT functionality is integrated in the mobile relay, and the functional entity is used as a Uu interface termination point of a backhaul link between the mobile relay and a donor radio access network (donor RAN) device or another mobile relay. After the mobile relay is started, the MT functionality accesses a network through cell selection.

It may be understood that, different from the IAB node, the mobile relay has mobility. For example, when a relay that integrates the wireless access link and the wireless backhaul link is mounted in a vehicle, so that the relay can move along with the vehicle, the relay is a typical mobile relay, that is, a vehicle-mounted relay (vehicle-mounted relay, VMR).

5. A donor radio access network (donor RAN) device is usually a radio access network device that is deployed on the ground and that has no mobility, and provides network access for a terminal device through a backhaul link between a donor RAN and a mobile relay and an access link provided by the mobile relay. The donor radio access network device may include a CU and one or more DUs. The CU mainly processes a non-real-time radio higher layer protocol stack function, for example, an RRC layer protocol and a packet data convergence protocol (packet data convergence protocol, PDCP) layer protocol. The DU mainly processes a PHY function and a layer 2 function with a high real-time requirement, for example, a PHY protocol. The CU and the DU may communicate with each other through an F1 interface.

A quantity of mobile relays that can be connected to the donor RAN is not limited in this application.

For ease of description, the donor radio access network device is referred to as an access network device for short in this application. Unless otherwise specified, the access network device in embodiments of this application is a donor radio access network (donor RAN) device.

The following describes network elements in a core network.

6. An access and mobility management function (access and mobility management function, AMF) network element is in a core network, and is mainly configured for registration of a terminal in a mobile network, mobility management, and a tracking area update process. The access and mobility management network element is responsible for termination of an NAS message, registration management, connection management, reachability management, tracking area list (tracking area list, TA list) allocation, mobility management, and the like, and is also responsible for forwarding a session management (session management, SM) message to a session management network element.

7. A session management function (session management function, SMF) network element is mainly configured for user plane function (user plane function, UPF) network element selection, UPF network element reselection, IP address allocation, session establishment, modification, and release, and quality of service (quality of service, QoS) control.

8. A unified data management (Unified Data Management, UDM) network element is mainly configured to manage subscription data, and is responsible for notifying a corresponding network element when the subscription data is modified.

9. A unified data repository (Unified Data Repository, UDR) network element is mainly configured for storage and retrieval of subscription data by a UDM network element, storage and retrieval of policy data by a policy control function (policy control function, PCF) network element, and storage and retrieval of structured data for exposure by a network exposure function (network exposure function, NEF) network element. The UDR may provide different data access authentication mechanisms for different types of data, such as the subscription data and the policy data, to ensure data access security. For an invalid service-oriented operation or a data access request, the UDR may return a failure response carrying a proper cause value.

10. An application function (application function, AF) network element may provide an application-layer service for a terminal device. When providing a service for the terminal device, the AF has a requirement on QoS and a charging (charging) policy, and needs to notify a network of the requirement. In addition, the AF also needs a core network to feed back application-related information.

11. A UPF network element is mainly configured to implement all or a part of the following functions: interconnection between a protocol data unit (protocol data unit, PDU) session and a data network, packet routing and forwarding (for example, support of an uplink classifier (uplink classifier) to route traffic flows to a data network, and support of a branching point (branching point) to support a multi-homed (multi-homed) PDU session), packet inspection, and the like.

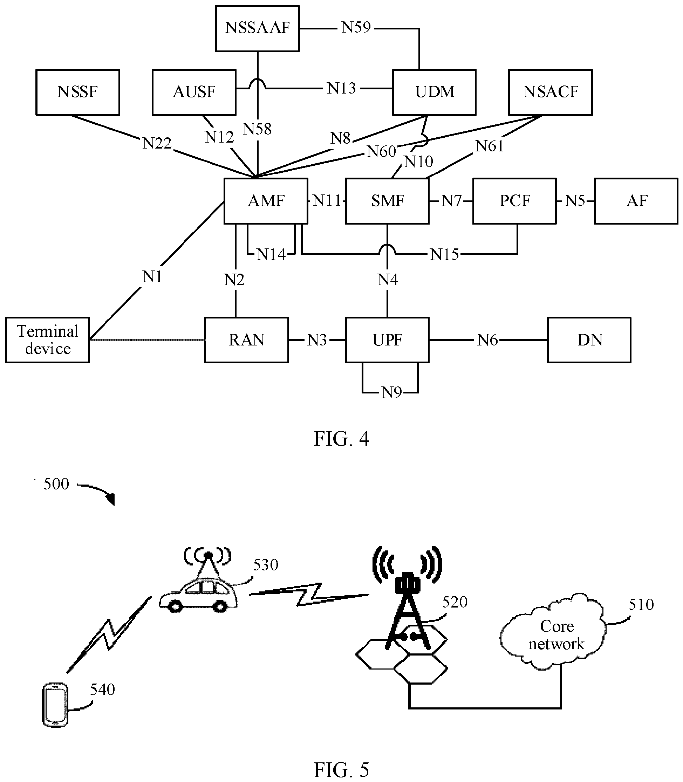

For ease of understanding embodiments of this application, the following describes in detail a 5G network architecture applicable to embodiments of this application with reference to FIG. 3 and FIG. 4.

FIG. 3 is a schematic of a network architecture based on a service-oriented architecture according to an embodiment of this application. As shown in FIG. 3, a 5G network architecture may include three parts: a terminal device, a data network (data network, DN), and an operator network.

The operator network may include one or more of the following network elements: an authentication server function (Authentication Server Function, AUSF) network element, an NEF network element, a PCF network element, a UDM network element, a UDR, a network repository function (network repository function, NRF) network element, an AF network element, an AMF network element, an SMF network element, a RAN network element, a UPF network element, a network slice selection function (network slice selection function, NSSF) network element, a network slice-specific authentication and authorization function (network slice-specific authentication and authorization function, NSSAAF) network element, a service communication proxy (service communication proxy, SCP) network element, and the like. In the foregoing operator network, a part other than a radio access network part may be referred to as a core network part. In a network shown in FIG. 3, the network elements may communicate with each other based on a service-oriented interface. An Nxxx in the figure is a service-based service-oriented interface. It should be understood that, for functions of some network elements, reference may be made to the descriptions of the foregoing network elements. For details, refer to a conventional technology. Details are not described herein again.

FIG. 4 is a schematic of a network architecture based on a point-to-point interface according to an embodiment of this application. For network elements included in a network shown in FIG. 4 and related descriptions thereof, refer to the descriptions in FIG. 3. Different from the network architecture shown in FIG. 3, in the network architecture shown in FIG. 4, an interface between the network elements is a point-to-point interface rather than a service-oriented interface.

For ease of understanding a communication method provided in embodiments of this application, the following describes a system architecture of the communication method provided in embodiments of this application. It may be understood that the system architecture described in embodiments of this application is intended to describe the technical solutions in embodiments of this application more clearly, and constitutes no limitation on the technical solutions provided in embodiments of this application.

FIG. 5 is a schematic of a system architecture applicable to a method according to an embodiment of this application. As shown in FIG. 5, a system 500 may include a core network 510, an access network device 520, a mobile relay 530, and a terminal device 540.

The system 500 may be, for example, a 5G system (5G system, 5GS). In the 5GS, the core network 510 may be a 5G core network (5G core, 5GC). For example, the core network 510 may include but is not limited to an AMF, an SMF, a UPF, and the like. Each network element may be configured to implement a function of the network element. For details, refer to the foregoing descriptions. A specific network element included in the core network 510 and a function, a quantity, and a form thereof are not limited in this application. The access network device 520 may be connected to the core network 510, and may be configured to provide a network access function for an authorized terminal in a coverage area, manage a radio resource, and complete forwarding of a control signal and user data between a terminal device and the core network 510.

In this embodiment of this application, the access network device 520 may not only provide a wireless access service for the terminal device, but also provide a wireless backhaul function for a mobile relay (for example, the mobile relay 530 shown in FIG. 5), so that the mobile relay can access the core network 510 by using the access network device 520. The mobile relay 530 has mobility. For example, the mobile relay 530 may be deployed in a vehicle. The mobile relay 530 is connected to the access network device 520 through a wireless backhaul link, and then is connected to the core network 510 by using the access network device 520. In addition, the mobile relay 530 provides a wireless access link for a nearby terminal device (for example, a terminal device in the vehicle or a terminal device that is outside the vehicle and that is close to the mobile relay 530), so that the terminal device can access the network. For example, the terminal device 540 shown in FIG. 5 is located outside the vehicle (but close to the vehicle), and may access the mobile relay 530 through the wireless access link provided by the mobile relay 530, and then access the core network 510 through the wireless backhaul link between the access network device 520 and the mobile relay 530.

It should be understood that FIG. 5 is merely an example, and shows one core network, one radio access network device, one mobile relay, and one terminal device. However, this should not constitute any limitation on this application. There may be one or more devices of each type. There may be one or more access network devices accessing a same core network. There may also be one or more mobile relays accessing a same radio access network device. There may also be one or more terminal devices accessing a same mobile relay.

In addition, although not shown in FIG. 5, the terminal device 540 may alternatively be located in the vehicle.

It may be understood that the current 5G system relates to many scenarios in which location information of a terminal device needs to be obtained. For example, capability exposure relates to reporting of the location information of the terminal device, for example, a location reporting (location reporting) process, and a granularity of the corresponding location information may be a tracking area identity (tracking area identity, TAI) or a cell ID. For another example, in a local area data network (local area data network, LADN) scenario, the SMF subscribes to a terminal device mobility event notification (mobility event notification) from the AMF, and a granularity of corresponding location information may be a TAI. The AMF determines, based on the TAI and a TAI list (list) corresponding to the LADN, whether a current location of the terminal device is in a service area of the LADN. For another example, in a session establishment process, the SMF selects a session anchor based on a location of a terminal device, and a granularity of corresponding location information may be a TAI.

However, cell information of the mobile relay is configured by an OAM. When the mobile relay moves, the cell information of the mobile relay may remain unchanged or cannot be updated in time. As a result, the cell information of the mobile relay cannot match a current geographical location. Therefore, after the terminal device is connected to the mobile relay, the cell information of the mobile relay can no longer accurately represent an actual location of the terminal device.

To resolve the foregoing problem, this application provides a communication method. When a cell accessed by a terminal device is a cell of a mobile relay, location information of the terminal device may be determined based on location information of the mobile relay, to resolve a problem that cell information of the mobile relay may not match an actual geographical location of the terminal device, so that a core network device can accurately determine the location of the terminal device.

In a first possible design, after determining that the cell accessed by the terminal device is a cell of the mobile relay, the core network device requests the location information of the mobile relay from a first access network device currently accessed by the mobile relay, and after receiving current location information of the mobile relay from the first access network device, determines the location information of the terminal device based on the location information of the mobile relay, where the location information of the mobile relay includes a TAC and/or a cell ID corresponding to a cell of the first access network device currently accessed by the mobile relay.

In a second possible design, after determining that the cell accessed by the terminal device is a cell of the mobile relay, a first access network device proactively reports the current location information of the mobile relay to the core network device serving the terminal device, so that the core network device determines the location information of the terminal device based on the current location information of the mobile relay, where the location information includes a TAC and/or a cell ID corresponding to a cell of the first access network device currently accessed by the mobile relay.

The following separately describes the foregoing two possible designs in detail with reference to specific embodiments.

To better understand embodiments of this application, the following descriptions are first provided.

First, in embodiments of this application, descriptions such as "when", "in a case", and "if" mean that a device (for example, a core network device or an access network device) performs corresponding processing in an objective situation, and are not intended to limit time, and the device (for example, the core network device or the access network device) is not required to perform a determining action during implementation; and do not mean any other limitation.

Second, the terms "first", "second", and various numbers in the following embodiments are merely used for differentiation for ease of description, but are not intended to limit the scope of embodiments of this application. For example, the terms are intended to distinguish between different access network devices. A person skilled in the art may understand that the terms such as "first" and "second" do not limit a quantity or an execution sequence, and the terms such as "first" and "second" do not indicate a definite difference.

Third, in embodiments of this application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific meaning represented by the character "/" may be understood with reference to the context. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. Each of a, b, and c may be singular or plural.

Fourth, for ease of understanding and description, actions performed by the core network device in the following embodiments may be specifically performed by an AMF. The AMF is an AMF serving an MT functionality of a mobile relay, that is, an AMF registered when the MT functionality of the mobile relay accesses a network. It may also be briefly described as the AMF registered when the mobile relay accesses the network. In addition, the mobile relay in the following embodiments may be, for example, a VMR. Unless otherwise specified, the access network device in the following embodiments is a donor radio access network (donor RAN) device.

Fifth, in embodiments of this application, related descriptions of sending a message or a packet by a network element A to a network element B and receiving a message or a packet by the network element B from the network element A are intended to describe a specific network element to which the message or the packet is to be sent, but does not limit whether the message or the packet is to be directly sent or indirectly sent through another network element.

For example, that a second access network device receives context information of the mobile relay from a first access network device described in this specification is not limited to that the first access network device directly sends the context information of the mobile relay to the second access network device. In an N2 handover scenario, because communication between the first access network device and the second access network device through an Xn interface is not supported, the communication between the first access network device and the second access network device may be forwarded by the AMF. However, in an Xn handover scenario, because communication between the first access network device and the second access network device through an Xn interface is supported, the first access network device and the second access network device can directly interact with each other without forwarding by the AMF. Although examples are not listed one by one in this specification, a person skilled in the art can understand the meaning.

The following describes in detail a communication method provided in embodiments of this application with reference to the accompanying drawings. It should be understood that the following embodiments describe the method from a perspective of interaction between the core network device and the access network device. The access network device may be the access network device 520 shown in FIG. 5, and the core network device may be the core network device 510 shown in FIG. 5.

It should be further understood that, the following embodiments are described by using the interaction between the core network device and the access network device as an example, but should not constitute any limitation on an execution body of the method. The method provided in embodiments of this application may be performed, provided that a program that records code of the method provided in embodiments of this application can be run. For example, the core network device may alternatively be replaced with a component (for example, a chip or a chip system) configured in the core network device, or another functional module that can invoke a program and execute the program. The access network device may alternatively be replaced with a component (for example, a chip or a chip system) configured in the access network device, or another functional module that can invoke a program and execute the program. This is not limited in embodiments of this application.

The following first describes the first possible design in detail. After determining that the cell accessed by the terminal device is a cell of the mobile relay, the core network device requests the location information of the mobile relay from a first access network device currently accessed by the relay device, and after receiving the current location information of the mobile relay from the first access network device, determines the location information of the terminal device based on the location information of the mobile relay.

It should be noted that the core network device is a core network device serving the terminal device, and the mobile relay is configured to provide a relay service between the terminal device and the first access network device. The first access network device is an access network device that currently provides a service for the mobile relay, and may be understood as an access network device currently accessed by the mobile relay. The mobile relay is handed over to another access network device in a movement process. In other words, a second access network device, a third access network device, and the like may provide a service for the mobile relay.

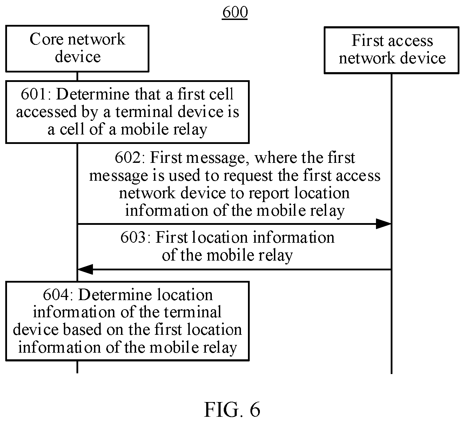

FIG. 6 is a schematic flowchart of a communication method 600 according to an embodiment of this application. The method 600 shown in FIG. 6 may include step 601 to step 604. The steps in the method 600 are described below in detail.

Step 601: A core network device determines that a first cell accessed by a terminal device is a cell of a mobile relay.

The first cell is a cell of the mobile relay currently accessed by the terminal device. That a first cell accessed by a terminal device is a cell of a mobile relay may be understood as that the terminal device accesses the mobile relay, in other words, the terminal device may access a network based on the mobile relay.

As described above, the first cell accessed by the terminal device is a cell of the mobile relay. When the mobile relay moves, cell information about the first cell of the mobile relay may remain unchanged or cannot be updated in time. Therefore, after the terminal device is connected to the mobile relay, the cell information about the first cell can no longer accurately represent an actual location of the terminal device. In this case, location information of the terminal device may be determined by using the method provided in this application.

The core network device may determine, in any one of the following possible manners, that the first cell accessed by the terminal device is a cell of the mobile relay.

Manner 1: The core network device receives the information about the first cell from a first access network device, where the information about the first cell includes a TAC and/or a cell ID corresponding to the first cell; and determines, based on prestored configuration information and the information about the first cell, that the first cell is a cell of the mobile relay, where the configuration information includes cell information of the mobile relay, the cell information includes a TAC and/or a cell ID, and the cell information of the mobile relay includes the information about the first cell. In other words, the core network device prestores the cell information of the mobile relay, including the TAC and/or the cell ID. The core network device compares the information about the first cell with the prestored cell information of the mobile relay, and, if the information about the first cell is included in the cell information of the mobile relay, determines that the first cell is a cell of the mobile relay.

It should be understood that the information about the first cell received by the core network device from the first access network device may include a TAI corresponding to the first cell, and the TAC may be obtained based on the TAI, and then the TAC corresponding to the first cell is compared with the prestored TAC.

It should be further understood that the core network device may prestore the TAC, or the cell ID, or the TAC and the cell ID that correspond to the cell of the mobile relay. This is not limited in this embodiment of this application.

Manner 2: The core network device receives second information from a first access network device or the terminal device, where the second information indicates that a cell accessed by the terminal device is a cell of the mobile relay. In other words, the first access network device may indicate, to the core network device, that the cell accessed by the terminal device is a cell of the mobile relay. Alternatively, the terminal device indicates, to the core network device, that the cell accessed by the terminal device is a cell of the mobile relay.

For example, the first access network device preconfigures configuration information indicating whether a relay device is a mobile relay. After receiving a request message of the terminal device via the mobile relay, the first access network device may indicate, to the core network device, that the cell accessed by the terminal device is a cell of the mobile relay. Specifically, the first access network device sends an N2 message to the core network device, where the N2 message carries indication information indicating that the cell accessed by the terminal device is a cell of the mobile relay. Optionally, the N2 message may further include an identifier of the mobile relay, and the identifier of the mobile relay is used to identify the mobile relay currently accessed by the terminal device.

For example, the terminal device receives a broadcast message of the first cell, where the broadcast message carries indication information indicating that the cell is a cell of the mobile relay. Optionally, the broadcast message may further carry the identifier of the mobile relay. The terminal device may indicate, to the core network device, that the cell accessed by the terminal device is a cell of the mobile relay. Specifically, the terminal device sends a registration request message to the core network device, where the registration request message carries indication information indicating that the cell accessed by the terminal device is a cell of the mobile relay. Optionally, the registration request message may further include the identifier of the mobile relay, where the identifier of the mobile relay is used to identify the mobile relay currently accessed by the terminal device.

Step 602: The core network device sends a first message to the first access network device, where the first message is used to request the first access network device to report location information of the mobile relay.

The first message carries first information, and the first information is used by the first access network device to determine a mobile relay, to be specific, the first information indicates a mobile relay whose location information is to be reported by the first access network device.

Optionally, the first information includes one or more of the following: the identifier of the mobile relay; the TAC corresponding to the first cell; or the cell ID of the first cell.

The core network device may include any one of the foregoing information in the first message, so that the first access network device determines a mobile relay whose location information is to be reported by the first access network device. It should be noted that content of the first information is not limited in this application, and the first information may alternatively be an identifier of the terminal device. It should be understood that the first information falls within the scope of this application, provided that the first information received by the first access network device may be used to determine the mobile relay.

For example, the core network device sends the first message to the first access network device, where the first message carries the identifier of the mobile relay, to indicate the first access network device to report the current location information of the mobile relay.

The core network device may determine the identifier of the mobile relay in any one of the following manners.

Manner 1: If the N2 message sent by the first access network device to the core network device includes the identifier of the mobile relay, the core network device may obtain the identifier of the mobile relay from the N2 message.

Manner 2: The core network device determines, based on the prestored configuration information (as shown in Table 1) of the cell of the mobile relay and the TAC and/or the cell ID corresponding to the first cell accessed by the terminal device, the identifier of the mobile relay corresponding to the first cell accessed by the terminal device. For example, the core network device determines, based on a correspondence shown in Table 1 and the TAC and/or the cell ID corresponding to the first cell accessed by the terminal device, the identifier of the mobile relay corresponding to the TAC and/or the cell ID corresponding to the first cell in Table 1. The configuration information of the cell of the mobile relay prestored in the core network device may be shown in Table 1.

**Table 1**

| Configuration information of the cell of the mobile relay prestored in the core network device | |
|---|---|
| Identifier #1 of the mobile relay | Cell information: TAC #1 and cell ID #1 |
| Identifier #2 of the mobile relay | Cell information: TAC #2 and cell ID #2 |
| Identifier #3 of the mobile relay | Cell information: TAC #3 and cell ID #3 |
| Identifier #4 of the mobile relay | Cell information: TAC #4 and cell ID #4 |

Table 1 shows identifiers of a plurality of mobile relays and correspondences between the identifiers and the cell information. For example, the cell information corresponding to the identifier #1 of the mobile relay is the TAC #1 and the cell ID #1.

It should be understood that the TAC in Table 1 may be replaced with a TAI, and the TAI is formed by the TAC and a public land mobile network (public land mobile network, PLMN).

Manner 3: If the terminal device sends the identifier of the mobile relay to the core network device in the registration request message, the core network device may obtain the identifier of the mobile relay from the registration request message.

A method for how the first access network device determines the mobile relay based on the first information is as follows.

Manner 1: If the first information includes the identifier of the mobile relay, the first access network device determines the mobile relay based on the identifier of the mobile relay.

Manner 2: If the first information includes the TAC corresponding to the first cell, the first access network device determines, based on the prestored configuration information (as shown in Table 1) of the cell of the mobile relay, the identifier of the mobile relay corresponding to the first cell.

Manner 3: If the first information includes the cell ID of the first cell, the first access network device determines, based on the prestored configuration information (as shown in Table 1) of the cell of the mobile relay, the identifier of the mobile relay corresponding to the first cell.

Manner 4: If the first information includes the identifier of the terminal device, the first access network device determines, based on the identifier of the terminal device, a mobile relay currently accessed by the terminal device. Optionally, the first message further carries one or more of the following: a reporting periodicity of the location information of the mobile relay, a location information type of the mobile relay, or an identifier of the core network device, and the location information type of the mobile relay includes a TAC and/or a cell ID of a cell accessed by the mobile relay.

The core network device may further indicate the reporting periodicity of the location information of the mobile relay to the first access network device, in other words, how often the location information of the mobile relay is reported. The core network device may further indicate the location information type of the mobile relay to the first access network device, to be specific, whether the first access network device reports the TAC, or the cell ID, or both the TAC and the cell ID of the cell accessed by the mobile relay. The core network device may further indicate the identifier of the core network device to the first access network device, to be specific, indicate, to the first access network device, a core network device to which the location information of the mobile relay is reported, where the core network device is a core network device serving the terminal device.

Step 603: The first access network device sends first location information to the core network device.

The first location information is a TAC and/or a cell ID corresponding to a second cell currently accessed by the mobile relay, and the second cell is a cell of the first access network device, in other words, the first access network device reports the TAC and/or the cell ID corresponding to the cell of the first access network device currently accessed by the mobile relay.

For example, after receiving the first message from the core network device, the first access network device is triggered to report the TAC and/or the cell ID corresponding to the second cell currently accessed by the mobile relay. For example, the TAC and/or the cell ID corresponding to the second cell currently accessed by the mobile relay may be included in a location reporting (location report) message.

A method for how the first access network device determines the first location information may be as follows: The first access network device determines, based on locally stored context information, that a cell currently accessed by the mobile relay is the second cell, and further determines the TAC and/or the cell ID corresponding to the second cell.

It should be understood that a cell information type of the second cell reported by the first access network device may be indicated by the core network device.

Step 604: The core network device determines the location information of the terminal device based on the first location information of the mobile relay.

After receiving the location information of the mobile relay from the first access network device, the core network device determines, based on the location information of the mobile relay, the location information of the terminal device accessing the mobile relay.

In a possible implementation, the core network device uses the first location information of the mobile relay as the location information of the terminal device. For example, the first location information includes the TAC and/or the cell ID corresponding to the second cell currently accessed by the mobile relay, and the core network device may use the TAC and/or the cell ID corresponding to the second cell to represent a location of the terminal device.

In another possible implementation, the core network device uses the first location information of the mobile relay and location information of the first cell of the mobile relay accessed by the terminal device together as the location information of the terminal device. For example, the first location information includes the TAC and/or the cell ID corresponding to the second cell currently accessed by the mobile relay, and the location information of the first cell of the mobile relay accessed by the terminal device includes the TAC and/or the cell ID corresponding to the first cell. The core network device uses both the TAC and/or the cell ID corresponding to the first cell and the TAC and/or the cell ID corresponding to the second cell to represent a location of the terminal device (in other words, the location information of the terminal device includes both the TAC and/or the cell ID corresponding to the first cell and the TAC and/or the cell ID corresponding to the second cell).

Optionally, the method 600 shown in FIG. 6 further includes: The first access network device stores, in a context of the mobile relay, one or more of the identifier of the mobile relay, the reporting periodicity of the location information of the mobile relay, the location information type of the mobile relay, or the identifier of the core network device that are carried in the first information.

Optionally, the method 600 shown in FIG. 6 further includes: The core network device stores the location information of the terminal device in a context (UE context) of the terminal device accessing the mobile relay, where the location information of the terminal device is determined by the core network device based on the location information of the mobile relay.

For example, the location information of the terminal device may be the location information of the mobile relay (for example, the TAC and/or the cell ID corresponding to the cell accessed by the mobile relay). For another example, the location information of the terminal device may include the location information of the mobile relay and the information about the first cell (for example, the TAC and/or the cell ID corresponding to the cell accessed by the mobile relay and the TAC and/or the cell ID corresponding to the first cell, in other words, the location information of the terminal device includes both the TAC and/or the cell ID corresponding to the first cell and the TAC and/or the cell ID corresponding to the second cell).

Optionally, the method 600 shown in FIG. 6 further includes: The core network device receives second location information of the mobile relay from a second access network device, where the second location information includes a TAC and/or a cell ID corresponding to a third cell accessed by the mobile relay, and the third cell is a cell of the second access network device. The core network device determines, based on the received second location information, that the location of the terminal device changes.

At a moment, when the mobile relay moves (it may be considered that the terminal device moves along with the mobile relay), and an access network device accessed by the mobile relay is changed (for example, a donor base station is changed), for example, the mobile relay is handed over from the first access network device to the second access network device, in other words, the mobile relay is handed over from a cell of the first access network device to a cell of the second access network device, for example, from the second cell to the third cell, the second access network device reports the second location information of the mobile relay to the core network device. Correspondingly, the core network device may receive the second location information of the mobile relay from the second access network device, where the second location information includes the TAC and/or the cell ID corresponding to the third cell accessed by the mobile relay.

In a possible implementation, the second access network device may be triggered to report the second location information of the mobile relay to the core network device in the following manner: The second access network device receives context information of the mobile relay from the first access network device, where the context information includes location reporting information (location reporting information), for example, the identifier of the core network device. After receiving the context information of the mobile relay, the second access network device reports a TAC and/or a cell ID corresponding to a cell of an access network device currently accessed by the mobile relay.

After receiving the second location information, the core network device may determine, based on the second location information, that the location of the terminal device changes. For example, the first location information includes the TAC and/or the cell ID of the second cell, the second location information includes the TAC and/or the cell ID of the third cell, and the first location information is different from the second location information.

It may be understood that the mobile relay may be handed over to another access network device based on an Xn interface or an N2 interface. The following separately describes a process of transferring the context information when the mobile relay is handed over based on the foregoing two interfaces.

In a scenario in which the mobile relay is handed over based on the Xn interface, the first access network device transfers the context information of the mobile relay to the second access network device through the Xn interface, where the context information of the mobile relay includes, for example, the identifier of the core network device, and the core network device is a core network device serving the terminal device.

In a scenario in which the mobile relay is handed over based on the N2 interface, the first access network device forwards the context information of the mobile relay to the second access network device by using the core network device, where the context information of the mobile relay includes, for example, the identifier of the core network device, and the core network device is a core network device serving the terminal device.

For example, the first access network device sends a handover required (Handover Required) message to an AMF serving the mobile relay. The handover required message includes the context information sent by the first access network device to the second access network device. The context information may be transmitted by using a source to target transparent container (source to target transparent container). The context information further includes the location reporting information (location reporting information), for example, the identifier of the core network device. The AMF serving the mobile relay sends a handover request message to the second access network device, where the handover request message carries the context information sent by the first access network device to the second access network device.

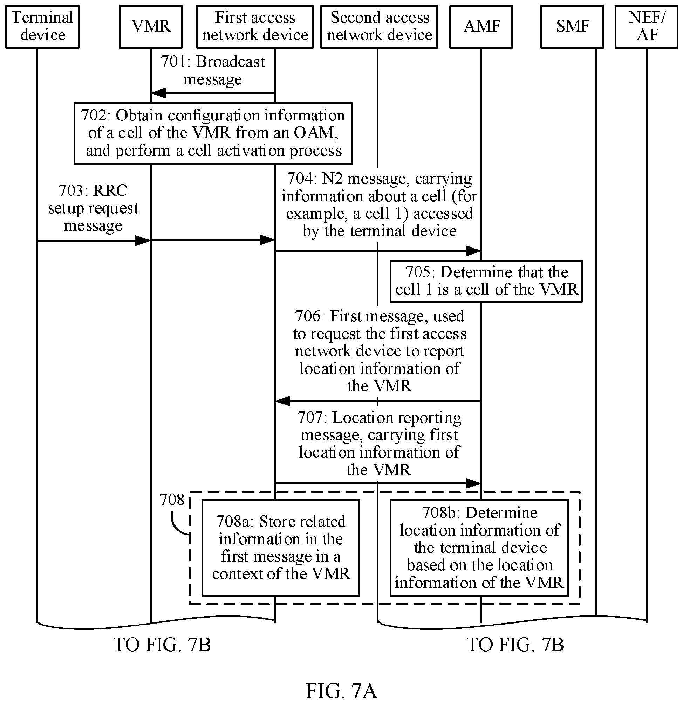

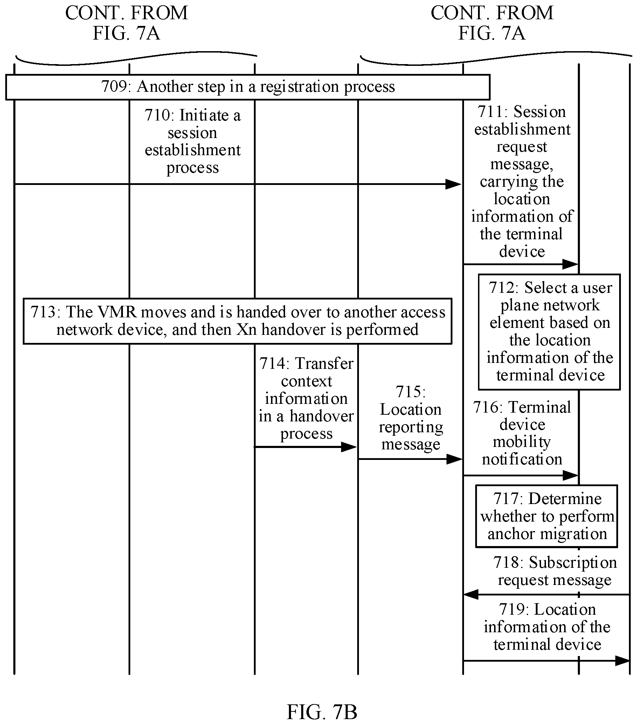

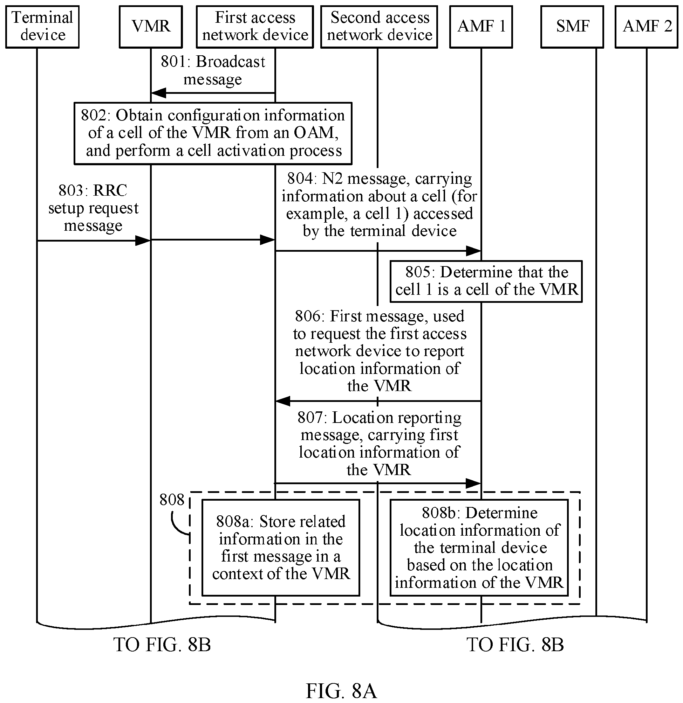

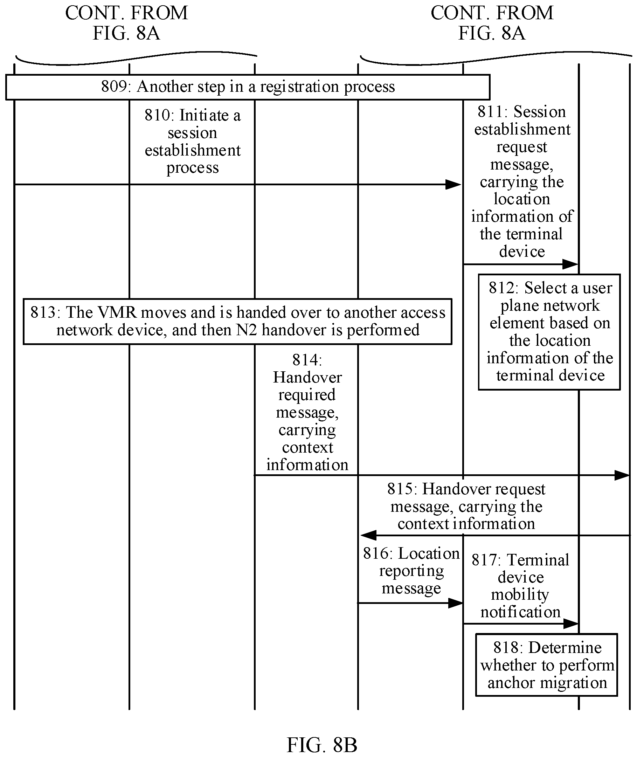

FIG. 7A, FIG. 7B, FIG. 8A, and FIG. 8B show examples of the communication method in the embodiment shown in FIG. 6. A difference between embodiments shown in FIG. 7A and FIG. 7B and FIG. 8A and FIG. 8B lies in that when a mobile relay moves and is handed over to another access network device, in FIG. 7A and FIG. 7B, the handover is based on an Xn interface, but in FIG. 8A and FIG. 8B, the handover is based on an N2 interface.

The method shown in FIG. 7A and FIG. 7B includes step 701 to step 719. The following describes each step of the method shown in FIG. 7A and FIG. 7B in detail. It should be understood that in the method shown in FIG. 7A and FIG. 7B, an example in which the mobile relay is a VMR, and a core network device is an AMF is used for description. The AMF is an AMF serving a terminal device.

Step 701: A first access network device sends a broadcast message.

The broadcast message carries a TAC and/or a cell ID corresponding to a cell of the first access network device. An MT functionality of the VMR selects a cell accessed by the first access network device, and registers with a network.

Step 702: The VMR obtains configuration information of a cell of the VMR from an OAM, and performs a cell activation process.

The configuration information of the cell of the VMR includes a TAC and/or a cell ID corresponding to the cell of the VMR. A DU functionality of the VMR sends an F1 setup request message to the first access network device, to activate the cell of the VMR. For the process, refer to a conventional technology.

After the cell of the VMR is activated, the VMR may send a broadcast message to the terminal device, where the broadcast message includes cell information of the VMR, for example, the TAC and/or the cell ID. Optionally, the broadcast message may further include indication information indicating that the cell is a cell of the mobile relay. The terminal device accesses the cell of the VMR and initiates a registration process. In other words, a cell currently accessed by the terminal device is a cell of the VMR (the cell of the VMR accessed by UE and the cell of the first access network device accessed by the VMR are different cells). It may be understood that the VMR has mobility, and the cell of the VMR is also in a moving state.

Step 703: The terminal device sends an RRC setup request (RRC setup request) message to the first access network device. Correspondingly, the first access network device receives the RRC setup request message from the terminal device.

For a terminal device in an RRC idle (idle) state, the terminal device may send the RRC setup request message to the first access network device via the mobile relay. In other words, the terminal device expects to access the network via the mobile relay.

After receiving the RRC setup request message, the first access network device may select an AMF network element for the terminal device.

Step 704: The first access network device sends an N2 message to the AMF, where the N2 message carries information about a cell (for example, a cell 1) accessed by the terminal device and a registration request message, for example, a TAI and/or a cell ID corresponding to the cell of the VMR currently accessed by the terminal device.

Optionally, the N2 message may further carry an identifier of the VMR.

The TAI includes the TAC. The identifier of the VMR is an identifier corresponding to the VMR currently accessed by the terminal device, and is used to identify a VMR. The cell ID is used to identify a cell of the VMR currently accessed by the terminal device.

Step 705: The AMF determines that the cell 1 is a cell of the VMR.

A specific method for how the AMF determines that the cell 1 is a cell of the VMR may be as follows.

Manner 1: The AMF receives a TAI and/or a cell ID of the cell 1 from the first access network device, and determines, based on prestored configuration information and the TAI and/or the cell ID of the cell 1, that the cell 1 is a cell of the mobile relay. For example, the configuration information locally stored in the AMF is shown in Table 2. The TAI of the cell 1 is a TAI #1, and the cell ID is a cell ID #1. The AMF determines that the cell 1 is a cell of the mobile relay.

**Table 2**

| Configuration information of the cell of the mobile relay prestored in the AMF | |
|---|---|
| TAI | TAI #1, TAI #2, ..., and TAI #10 |
| Cell ID | cell ID #1, cell ID #2, ..., and cell ID #10 |

In another implementation, the configuration information prestored in the AMF may further include a corresponding VMR ID, as shown below.

**Table 3**

| Configuration information of the cell of the mobile relay prestored in the AMF | |
|---|---|
| VMR ID #1 | Cell information: TAI #1 and cell ID #1 |
| VMR ID #2 | Cell information: TAI #2 and cell ID #2 |
| VMR ID #3 | Cell information: TAI #3 and cell ID #3 |
| VMR ID #4 | Cell information: TAI #4 and cell ID #4 |

Table 3 shows a correspondence between a plurality of VMR IDs and the cell information. For example, the cell information corresponding to the VMR ID #1 is the TAI #1 and the cell ID #1.

It should be noted that the AMF may alternatively obtain the configuration information by using another network element.

Manner 2: The AMF receives second information from the first access network device or the terminal device, where the second information indicates that a cell accessed by the terminal device is a cell of the mobile relay. In other words, the first access network device may indicate, to the core network device, that the cell accessed by the terminal device is a cell of the mobile relay. Alternatively, the terminal device indicates, to the core network device, that the cell accessed by the terminal device is a cell of the mobile relay.

For example, the first access network device preconfigures configuration information indicating whether a relay device is a mobile relay. After receiving a request message of the terminal device via the mobile relay, the first access network device may indicate, to the AMF in the N2 message, that the cell accessed by the terminal device is a cell of the mobile relay.

For example, the terminal device receives a broadcast message of a first cell, where the broadcast message carries indication information indicating that the cell is a cell of the mobile relay, and the terminal device indicates, to the AMF in the registration request message, that the cell accessed by the terminal device is a cell of the mobile relay. Optionally, if the broadcast message further carries the VMR ID, the terminal device may further send the VMR ID to the AMF in the registration request message.

Step 706: The AMF sends a first message to the first access network device, to request the first access network device to report location information of the VMR.

For example, the first message may be a location reporting control (location reporting control) message. The first message carries first information, and the first information is used to determine the mobile relay.

Optionally, the first information includes one or more of the following: the VMR ID, a TAC corresponding to the first cell, a cell ID of the first cell, or an identifier of the terminal device. The identifier of the terminal device may be represented as a RAN UE NGAP ID.

The AMF may determine the VMR ID in any one of the following manners.

Manner 1: If the N2 message includes the VMR ID, the AMF may obtain the VMR ID from the N2 message.

Manner 2: The AMF determines, based on the prestored configuration information (as shown in Table 3) and the TAI and/or the cell ID of the cell 1, a VMR ID corresponding to the cell 1.

Manner 3: If the terminal device sends the VMR ID to the AMF in the registration request message, the AMF may obtain the VMR ID from the registration request message.

After receiving the first message, the first access network device determines a VMR whose location information is to be reported. For example, a method for how the first access network device determines the VMR is as follows.

Manner 1: If the first information includes the VMR ID, the first access network device determines the VMR based on the VMR ID.

Manner 2: If the first information includes the TAC corresponding to the first cell, the first access network device determines, based on the prestored configuration information (as shown in Table 3) of the cell of the VMR, a VMR ID corresponding to the first cell.

Manner 3: If the first information includes the cell ID of the first cell, the first access network device determines, based on the prestored configuration information (as shown in Table 3) of the cell of the VMR, a VMR ID corresponding to the first cell.

Manner 4: If the first information includes the RAN UE NGAP ID, the first access network device determines, based on the RAN UE NGAP ID, a mobile relay currently accessed by the terminal device.

Step 707: The first access network device sends a location reporting (location report) message to the AMF, where the location reporting message carries first location information of the VMR.

The first location information of the VMR may be represented as a TAI and/or a cell ID corresponding to a cell (for example, a cell 2) of the first access network device currently accessed by the VMR, where the TAI includes a TAC.

A method for how the first access network device determines the first location information may be as follows: The first access network device determines, based on locally stored context information, that a cell currently accessed by the VMR is a second cell, and further determines a TAC and/or a cell ID corresponding to the second cell.

Step 708: The first access network device stores the location information.

Step 708 includes step 708a and step 708b.

Step 708a: The first access network device stores related information in the first message in a context of the VMR.

For example, the first access network device stores the VMR ID, a reporting periodicity of the location information of the VMR, a location information type (for example, a TAI and/or a cell ID) of the VMR, and an identifier of the AMF in the context of the VMR.

Step 708b: The AMF determines location information of the terminal device based on the location information of the VMR, and stores the information in a context of the terminal device.

In a possible implementation, the AMF uses the first location information of the VMR as the location information of the terminal device. For example, the first location information includes the TAC and/or the cell ID corresponding to the second cell currently accessed by the VMR, and the AMF may use the TAC and/or the cell ID corresponding to the second cell to represent a location of the terminal device.

In another possible implementation, the AMF uses the first location information of the VMR and location information of the first cell of the VMR accessed by the terminal together as the location information of the terminal device. For example, the first location information includes the TAC and/or the cell ID corresponding to the second cell currently accessed by the VMR, and the location information of the first cell of the VMR accessed by the terminal includes the TAC and/or the cell ID corresponding to the first cell. The AMF uses both the TAC and/or the cell ID corresponding to the first cell and the TAC and/or the cell ID corresponding to the second cell to represent a location of the terminal device (in other words, the location information of the terminal device includes both the TAC and/or the cell ID corresponding to the first cell and the TAC and/or the cell ID corresponding to the second cell).

Step 709: For performance of another step in the registration process, refer to a conventional registration process of a terminal device. Details are not described herein again.

Step 710: The terminal device initiates a session establishment process to trigger establishment of a new session.

Step 711: The AMF sends a session establishment request message to an SMF, where the session establishment request message carries the location information of the terminal device. Because the AMF has already obtained the location information of the VMR by using the first access network device, the AMF determines the location information of the terminal device based on the location information of the VMR. In an implementation, the location information of the terminal device carried in the session establishment request message may be the location information of the VMR currently accessed by the terminal device (that is, information about the cell 2). For example, the session establishment request message carries a TAI corresponding to the cell 2 of the first access network device currently accessed by the VMR.

In another implementation, the location information of the terminal device carried in the session establishment request message may include the location information of the VMR currently accessed by the terminal device and information about the cell 1. For example, the session establishment request message carries a TAI corresponding to the cell 2 of the first access network device currently accessed by the VMR and the TAI corresponding to the cell 1.

Optionally, to help the SMF distinguish between the TAI corresponding to the cell 2 and the TAI corresponding to the cell 1, the session establishment request message may further carry indication information indicating to the SMF which TAI is a parameter of the cell 1 and which TAI is a parameter of the cell 2. Step 712: The SMF selects a user plane network element based on the location information of the terminal device.

The location information of the terminal device may be the location information of the VMR (for example, a TAC and/or a cell ID corresponding to a cell accessed by the VMR), or the location information of the terminal device includes the location information of the VMR and information (for example, a TAC and/or a cell ID corresponding to the cell 1) about a cell accessed by the terminal device.

For example, the SMF selects the user plane network element based on the TAI corresponding to the cell 2 of the first access network device currently accessed by the VMR. For another example, the SMF selects the user plane network element based on both the TAI corresponding to the cell 2 of the first access network device currently accessed by the VMR and the TAI corresponding to the cell 1.

Step 713: The VMR moves and is handed over to another access network device, and then Xn handover is performed.

For example, the MT functionality of the VMR is handed over from the first access network device to a second access network device. Then, the DU functionality of the VMR establishes an F1 connection to the second access network device, and the second access network device activates the cell of the VMR. That the MT functionality of the VMR is handed over from the first access network device to the second access network device may be understood as that the MT functionality of the VMR is handed over from a cell of the first access network device to a cell of the second access network device, in other words, the cell currently accessed by the VMR changes. For example, the cell currently accessed by the VMR changes from the cell 2 of the first access network device to a cell 3 of the second access network device. The TAC and/or the cell ID corresponding to the cell 2 are/is different from a TAC and/or a cell ID corresponding to the cell 3.

It should be noted that after the MT functionality of the VMR is handed over from the first access network device to the second access network device, cell information of the VMR may not change. For example, the TAC corresponding to the cell 1 remains unchanged.

Step 714: In a handover process, the first access network device transfers context information to the second access network device.

For example, the first access network device transfers the context information of the VMR to the second access network device through an Xn interface. The context information of the VMR includes location reporting information (location reporting information). The location reporting information includes one or more of the following: the identifier of the VMR, the reporting periodicity of the location information of the VMR, the location information type (for example, a TAI and/or a cell ID) of the VMR, or the identifier of the AMF. The identifier of the AMF is an identifier of an AMF serving the terminal device.

Step 715: The second access network device sends the location reporting (location report) message to the AMF.

The location reporting message carries information about a cell of the second access network device currently accessed by the VMR, for example, information about the cell 3. The information about the cell 3 includes the TAC and/or the cell ID corresponding to the cell 3.

Step 716: The AMF sends a terminal device mobility notification to the SMF.

Because the AMF receives the location information of the VMR from the second access network device, the location information is different from the location information received from the first access network device. Considering that the terminal device moves, the AMF sends the terminal device mobility notification (UE mobility notification) to the SMF. For example, the notification may carry a TAI of a cell currently accessed by the VMR (the TAI corresponds to the cell 3 of the second access network device). Optionally, the notification may further carry a TAI of the cell of the VMR accessed by the terminal device.

It may be understood that when the notification carries the TAI of the cell (for example, the cell 2) currently accessed by the VMR and the TAI of the cell (for example, the cell 1) of the VMR accessed by the terminal device, to help the SMF distinguish between the TAI corresponding to the cell currently accessed by the VMR and the TAI corresponding to the cell of the VMR accessed by the terminal device, the notification may further carry indication information indicating to the SMF which TAI is a parameter of the cell 1 and which TAI is a parameter of the cell 2.

Step 717: The SMF determines whether to perform anchor migration.

For example, the SMF determines, based on a current location of the terminal device, whether the anchor migration needs to be performed. For example, if the SMF determines that, at the current location of the terminal device, a path between the previously selected anchor user plane and an N3 interface user plane of an access network device is not optimal, the SMF may choose to perform the anchor migration. Specifically, the SMF may select a local anchor for a current session, to directly route data locally. This optimizes a user plane routing path and reduces a data transmission delay.

Step 718: Another network element (for example, an AF or an NEF) sends a subscription request message to the AMF.

The subscription request message is used to request to subscribe to the location information of the terminal device.

Step 719: The AMF sends the location information of the terminal device to the another network element.

For example, the AMF sends, to the another network element based on the subscription request message, the location information of the terminal device that is determined based on the location information of the VMR currently accessed by the terminal device. For another example, the AMF sends, to the another network element, the location information of the terminal device that is determined based on the location information of the VMR currently accessed by the terminal device and the cell information currently accessed by the terminal.

It should be noted that in this embodiment, that the SMF/AF/NEF obtains the location information of the terminal device from the AMF is merely an example, and another scenario in which another network element obtains the location information of the terminal device from the AMF is not excluded.

FIG. 8A and FIG. 8B show an example of a communication method in a scenario in which handover is performed based on an N2 interface. A difference between the embodiment shown in FIG. 8A and FIG. 8B and the embodiment shown in FIG. 7A and FIG. 7B lies in step 813 to step 815 in FIG. 8A and FIG. 8B, and other steps are similar to those in FIG. 7A and FIG. 7B. The method shown in FIG. 8A and FIG. 8B includes step 801 to step 818. The following describes each step of the method shown in FIG. 8A and FIG. 8B in detail. It should be understood that in the method shown in FIG. 8A and FIG. 8B, an example in which the mobile relay is a VMR, and a core network device is an AMF is used for description. An AMF 1 is a core network device serving a terminal device, and an AMF 2 is a core network device serving the VMR.

Step 801: A first access network device sends a broadcast message.

Step 802: The VMR obtains configuration information of a cell of the VMR from an OAM, and performs a cell activation process.

Step 803: The terminal device sends an RRC setup request (RRC setup request) message to the first access network device. Correspondingly, the first access network device receives the RRC setup request message from the terminal device.

Step 804: The first access network device sends an N2 message to the AMF 1, where the N2 message carries information about a cell (for example, a cell 1) accessed by the terminal device and a registration request message, for example, a TAI and/or a cell ID corresponding to the cell of the VMR currently accessed by the terminal device.

Optionally, the N2 message may further carry a VMR ID.

Step 805: The AMF 1 determines that the cell 1 is a cell of the VMR.

Step 806: The AMF 1 sends a first message to the first access network device, to request the first access network device to report location information of the VMR.

Step 807: The first access network device sends a location reporting (location report) message to the AMF, where the location reporting message carries first location information of the VMR.

A method for how the first access network device determines the first location information may be as follows: The first access network device determines, based on locally stored context information, that a cell currently accessed by the VMR is a second cell, and further determines a TAC and/or a cell ID corresponding to the second cell.

Step 808: The first access network device stores the location information.

Step 808 includes step 808a and step 808b.

Step 808a: The first access network device stores related information in the first message in a context of the VMR.

Step 808b: The AMF 1 determines location information of the terminal device based on the location information of the VMR, and stores the information in a context of the terminal device.

Step 809: For performance of another step in a registration process, refer to a conventional registration process of a terminal device. Details are not described herein again.

Step 810: The terminal device initiates a session establishment process to trigger establishment of a new session.

Step 811: The AMF 1 sends a session establishment request message to an SMF, where the session establishment request message carries the location information of the terminal device.

In an implementation, the location information of the terminal device carried in the session establishment request message may be the location information of the VMR currently accessed by the terminal device (that is, information about a cell 2). For example, the session establishment request message carries a TAI corresponding to the cell 2 of the first access network device currently accessed by the VMR.

In another implementation, the location information of the terminal device carried in the session establishment request message may include the location information of the VMR currently accessed by the terminal device and information about the cell 1. For example, the location information of the terminal device carried in the session establishment request message includes a TAI corresponding to the cell 2 of the first access network device currently accessed by the VMR and a TAI corresponding to the cell 1.

Optionally, to help the SMF distinguish between the TAI corresponding to the cell 2 and the TAI corresponding to the cell 1, the session establishment request message may further carry indication information indicating to the SMF which TAI is a parameter of the cell 1 and which TAI is a parameter of the cell 2.

Step 812: The SMF selects a user plane network element based on the location information of the terminal device.

It should be noted that, for a specific process of step 801 to step 812, refer to the descriptions in FIG. 7A and FIG. 7B. Details are not described herein again.

Step 813: The VMR moves and is handed over to another access network device, and then N2 handover is performed.

Through the N2 interface handover, an MT functionality of the VMR is handed over from the first access network device to a second access network device. Then, a DU functionality of the VMR establishes an F1 connection to the second access network device, and the second access network device activates the cell of the VMR. That the MT functionality of the VMR is handed over from the first access network device to the second access network device may be understood as that the MT functionality of the VMR is handed over from a cell of the first access network device to a cell of the second access network device, in other words, the cell currently accessed by the VMR changes. For example, the cell currently accessed by the VMR changes from the cell 2 of the first access network device to a cell 3 of the second access network device. A TAC and/or a cell ID corresponding to the cell 2 are/is different from a TAC and/or a cell ID corresponding to the cell 3.

It should be noted that after the MT functionality of the VMR is handed over from the first access network device to the second access network device, cell information of the VMR may not change. For example, a TAC corresponding to the cell 1 remains unchanged.

Step 814: In a handover process, the first access network device sends a handover required message to the AMF 2, where the handover required message carries context information.

For example, the first access network device sends the handover required (Handover Required) message to the AMF 2 serving the VMR. The handover required message includes the context information sent by the first access network device to the second access network device. The context information may be transmitted by using a source to target transparent container (source to target transparent container). The context information further includes location reporting information (location reporting information), for example, an identifier of the AMF 1.

Step 815: The AMF 2 sends a handover request message to the second access network device, where the handover request message carries the context information.

Step 816: The second access network device sends the location reporting (location report) message to the AMF 1.

The location reporting message carries information about a cell of the second access network device currently accessed by the VMR, for example, information about the cell 3. The information about the cell 3 includes the TAI and/or the cell ID corresponding to the cell 3.

Step 817: The AMF 1 sends a terminal device mobility notification to the SMF.

Step 818: The SMF determines whether to perform anchor migration.

For specific descriptions of step 817 and step 818, refer to the embodiment shown in FIG. 7A and FIG. 7B. Details are not described herein again.

It should be noted that in this embodiment, that the SMF/AF/NEF obtains the location information of the terminal device from the AMF is merely an example, and another scenario in which another network element obtains the location information of the terminal device from the AMF is not excluded.

Based on the foregoing technical solution, after determining that a cell accessed by the terminal device is a cell of the mobile relay, the core network device requests location information of the mobile relay from an access network device currently accessed by the mobile relay, and after receiving current location information of the mobile relay from the access network device, determines the location information of the terminal device based on the location information of the mobile relay, where the location information includes a TAC and/or a cell ID corresponding to a cell of the access network device currently accessed by the mobile relay. The core network device determines the location information of the terminal device based on the obtained location information of the mobile relay. This application provides a method for obtaining the location information of the terminal device in a scenario in which the terminal device accessing the mobile relay moves, to resolve a problem that cell information of the mobile relay accessed by the terminal device does not match a current actual location of the terminal device. In other words, although the cell information of the mobile relay cannot reflect the actual location information of the terminal device, the core network device can also accurately determine the actual location of the terminal device.

The following describes in detail another communication method (that is, the second possible design mentioned above) provided in an embodiment of this application. To be specific, after determining that a cell accessed by a terminal device is a cell of a mobile relay, a first access network device proactively reports current location information of the mobile relay to a core network device serving the terminal device, so that the core network device determines location information of the terminal device based on the current location information of the mobile relay, where the location information includes a TAC and/or a cell ID corresponding to a cell of the first access network device currently accessed by the mobile relay.

It should be noted that the core network device is a core network device serving the terminal device, and the mobile relay is configured to provide a relay service between the terminal device and the first access network device. The first access network device is an access network device that currently provides a service for the mobile relay, and may be understood as an access network device currently accessed by the mobile relay. The mobile relay is handed over to another access network device in a movement process. In other words, a second access network device, a third access network device, and the like may provide a service for the mobile relay.

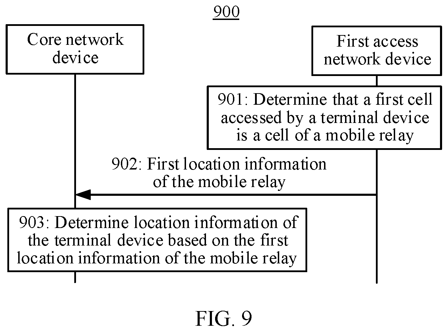

FIG. 9 is a schematic flowchart of a communication method 900 according to an embodiment of this application. The method 900 shown in FIG. 9 may include step 901 to step 903. The steps in the method 900 are described below in detail.

Step 901: A first access network device determines that a first cell accessed by a terminal device is a cell of a mobile relay.

The first cell is a cell of the mobile relay currently accessed by the terminal device. That a first cell accessed by a terminal device is a cell of a mobile relay may be understood as that the terminal device accesses the mobile relay, in other words, the terminal device may access a network based on the mobile relay.

As described above, the first cell accessed by the terminal device is a cell of the mobile relay. When the mobile relay moves, cell information about the first cell of the mobile relay may remain unchanged or cannot be updated in time. In other words, cell information about the cell of the mobile relay cannot match a location of the terminal device. In this case, location information of the terminal device may be determined by using the method provided in this application.

The first access network device may determine, in any one of the following possible manners, that the first cell accessed by the terminal device is a cell of the mobile relay.

Manner 1: The first access network device determines, based on prestored configuration information and the information about the first cell, that the first cell is a cell of the mobile relay, where the information about the first cell includes a TAC and/or a cell ID corresponding to the first cell, the prestored configuration information includes the cell information of the mobile relay, the cell information includes a TAC and/or a cell ID, and the cell information of the mobile relay includes the information about the first cell. In other words, the first access network device prestores the cell information of the mobile relay, including the TAC and/or the cell ID. The first access network device compares the information about the first cell with the prestored cell information of the mobile relay, and, if the information about the first cell is included in the cell information of the mobile relay, determines that the first cell is a cell of the mobile relay. For the configuration information prestored in the first access network device, refer to the configuration information of the cell of the mobile relay prestored in the AMF shown in Table 2.

It should be understood that the first access network device may prestore the TAC, or the cell ID, or the TAC and the cell ID that correspond to the cell of the mobile relay. This is not limited in this embodiment of this application.

Manner 2: The first access network device receives first indication information from the mobile relay or the terminal device, where the first indication information indicates that the first cell is a cell having mobility, and/or the mobile relay has mobility. In an example, the terminal device may indicate, to the first access network device, that a cell accessed by the terminal device is the cell having mobility. For example, the terminal device indicates, to the first access network device in an RRC message, that the cell accessed by the terminal device is the cell having mobility. In another example, the mobile relay indicates, to the first access network device, that the mobile relay has mobility. For example, an F 1 setup request (F 1 setup request) message sent by the mobile relay to the first access network device carries indication information indicating that the mobile relay has mobility.

In conclusion, both of the foregoing manners may enable the first access network device to determine that the first cell accessed by the terminal device is a cell of the mobile relay. In other words, both of the foregoing manners may trigger the first access network device to report location information of the mobile relay to a core network device. The first access network device may further determine, by using another method, that the first cell accessed by the terminal device is a cell of the mobile relay. For example, the first access network device may further obtain, through OAM configuration, relay devices that are mobile relays in a network. Therefore, a specific implementation in which the first access network device determines that the first cell accessed by the terminal device is a cell of the mobile relay is not limited in this application.

Step 902: The first access network device sends first location information of the mobile relay to the core network device.

The first location information is a TAC and/or a cell ID corresponding to a second cell currently accessed by the mobile relay, and the second cell is a cell of the first access network device, in other words, the first access network device reports the TAC and/or the cell ID corresponding to the second cell of the first access network device currently accessed by the mobile relay.

A method for how the first access network device determines the first location information may be as follows: The first access network device determines, based on locally stored context information, that a cell currently accessed by the mobile relay is the second cell, and further determines the TAC and/or the cell ID corresponding to the second cell.

For example, after determining that the first cell accessed by the terminal device is a cell of the mobile relay, the first access network device proactively reports the TAC and/or the cell ID corresponding to the second cell currently accessed by the mobile relay.

Optionally, that the first access network device sends first location information of the mobile relay to the core network device serving the terminal device includes: The first access network device sends an N2 message to the core network device, where the N2 message includes the first location information.

For example, the first access network device may include, in the N2 message, the TAC and/or the cell ID corresponding to the second cell currently accessed by the mobile relay, and send the N2 message to the core network device.

Optionally, the N2 message further includes one or more of the following: the TAC corresponding to the first cell, the cell ID of the first cell, or an NAS message of the terminal device.

The NAS message includes a registration request message, a registration update request message, or a service request message. For example, the N2 message carries an identifier of the mobile relay, the first location information (for example, the TAC and/or the cell ID corresponding to the second cell), the TAC and/or the cell ID corresponding to the cell of the mobile relay currently accessed by the terminal device, and the like. The identifier of the mobile relay is used to identify the mobile relay currently accessed by the terminal device. Optionally, the N2 message further includes the registration request message of the terminal device.

It may be understood that, in an implementation, when receiving the NAS message from the terminal device, the first access network device sends the N2 message to the core network device, where the N2 message carries the NAS message (for example, the registration request message), the TAC and/or the cell ID corresponding to the cell of the mobile relay currently accessed by the terminal device, and the first location information of the mobile relay. In other words, when receiving the NAS message of the terminal device, the first access network device may send the NAS message and the first location information of the mobile relay to the core network device.

In another implementation, if the first access network device does not receive the NAS message from the terminal device, the first access network device may also send the first location information of the mobile relay to the core network device. In other words, the first access network device may directly send the first location information of the mobile relay to the core network device without depending on whether the NAS message of the terminal device is received.

It may be understood that the N2 message may include the TAC and/or the cell ID corresponding to the cell (for example, the second cell) accessed by the mobile relay, and the TAC and/or the cell ID of the first cell accessed by the terminal device. To help the core network device distinguish between the TAC and/or the cell ID corresponding to the first cell and the TAC and/or the cell ID corresponding to the second cell, optionally, the N2 message may further carry indication information indicating which TAC and/or cell ID are/is a parameter of the first cell and which TAC and/or cell ID are/is a parameter of the second cell. In this way, the core network device can distinguish between a plurality of TACs and/or cell IDs carried in the N2 message.

For example, in an implementation, the N2 message carries an information element used to identify user location information (user location information, URL), where the URL is used to identify the location information of the terminal device. According to the foregoing descriptions, the URL includes the TAC and/or the cell ID corresponding to the first cell. In addition, the N2 message further carries an information element used to identify the location information of the mobile relay (VMR location information, VMRLI), where the VMRLI is used to identify the location information of the mobile relay. According to the foregoing descriptions, the VMRLI includes the TAC and/or the cell ID corresponding to the second cell. After receiving the URL and the VMRLI, the core network device may distinguish which parameter is a parameter of the first cell (that is, a parameter included in the URL) and which TAC and/or cell ID are/is a parameter of the second cell (that is, a parameter included in the VMRLI).

In another implementation, the N2 message carries an information element used to identify URL, where the URL is used to identify the location information of the terminal device. According to the foregoing descriptions, the URL includes the TAC and/or the cell ID corresponding to the first cell, the TAC and/or the cell ID corresponding to the second cell, and indication information. The indication information indicates that the TAC and/or the cell ID corresponding to the second cell are/is the TAC and/or the cell ID corresponding to the second cell (for example, a cell 2) of the first access network device currently accessed by the VMR currently accessed by the terminal device. After receiving the URL, the core network device may distinguish, in the URL, which parameter is a parameter of the first cell and which parameter is a parameter of the second cell.

Step 903: The core network device determines the location information of the terminal device based on the first location information of the mobile relay.

After receiving the location information of the mobile relay from the first access network device, the core network device determines, based on the location information of the mobile relay, the location information of the terminal device accessing the mobile relay.

In a possible implementation, the core network device uses the location information of the mobile relay as the location information of the terminal device. For example, the first location information includes the TAC and/or the cell ID corresponding to the second cell currently accessed by the mobile relay, and the core network device may use the TAC and/or the cell ID to represent the location of the terminal device.

In another possible implementation, the core network device uses the first location information of the mobile relay and location information of the first cell of the mobile relay accessed by the terminal together as the location information of the terminal device. For example, the first location information includes the TAC and/or the cell ID corresponding to the second cell currently accessed by the mobile relay, and the location information of the first cell of the mobile relay accessed by the terminal includes the TAC and/or the cell ID corresponding to the first cell. The core network device uses both the TAC and/or the cell ID corresponding to the first cell and the TAC and/or the cell ID corresponding to the second cell to represent the location of the terminal device (in other words, the location information of the terminal includes both the TAC and/or the cell ID corresponding to the first cell and the TAC and/or the cell ID corresponding to the second cell).

Optionally, the method 900 shown in FIG. 9 further includes: The first access network device stores, in a context of the mobile relay, one or more of the identifier of the mobile relay, a reporting periodicity of the location information of the mobile relay, a location information type of the mobile relay, or an identifier of the core network device. The location information type of the mobile relay includes the TAC and/or the cell ID corresponding to the cell accessed by the mobile relay.

Optionally, the method 900 shown in FIG. 9 further includes: The core network device stores the location information of the terminal device in a context of the terminal device, where the location information of the terminal device is determined by the core network device based on the location information of the mobile relay.

For example, the location information of the terminal device may be the location information of the mobile relay (for example, the TAC and/or the cell ID corresponding to the cell accessed by the mobile relay). For another example, the location information of the terminal device may include the location information of the mobile relay and the information about the first cell (for example, the TAC and/or the cell ID corresponding to the cell accessed by the mobile relay and the TAC and/or the cell ID corresponding to the first cell).

Optionally, the method 900 shown in FIG. 9 further includes: The first access network device may further determine the reporting periodicity and/or a reporting condition of the location information of the mobile relay, where the reporting condition includes that a cell accessed by the mobile relay changes from the second cell to a third cell, the second cell and the third cell are cells of the first access network device, and the TAC and/or the cell ID of the second cell are/is different from a TAC and/or a cell ID of the third cell.

It may be understood that when the mobile relay moves, the mobile relay may be handed over from a cell of the first access network device to another cell of the first access network device, and the two cells differ from each other in the TAC and/or the cell ID. In this case, the first access network device may report, to the core network device, a TAC and/or a cell ID corresponding to a cell currently accessed by the mobile relay.

For example, if the first access network device determines that the mobile relay is handed over from the cell 2 to a cell 3, where both the cell 2 and the cell 3 are cells of the first access network device, and the TAC and/or the cell ID of the cell 2 are/is different from a TAC and/or a cell ID of the cell 3, the first access network device may report current second location information of the mobile relay by using a location reporting message, that is, the TAC and/or the cell ID corresponding to the cell 3. Correspondingly, the core network device receives the current second location information of the mobile relay from the first access network device, that is, the TAC and/or the cell ID corresponding to the cell 3.

It should be noted that, when a cell accessed by the mobile relay changes from the second cell of the first access network device to the third cell of the first access network device, cell information of the mobile relay may not change. For example, a TAC corresponding to a cell 1 remains unchanged.

Optionally, the method 900 shown in FIG. 9 further includes: The core network device receives third location information of the mobile relay from a second access network device, where the third location information includes a TAC and/or a cell ID corresponding to a fourth cell currently accessed by the mobile relay, and the fourth cell is a cell of the second access network device. Correspondingly, the second access network device sends the third location information of the mobile relay to the core network device.

At a moment, when the mobile relay moves (it may be considered that the terminal device moves along with the mobile relay), and an access network device accessed by the mobile relay is changed (for example, a donor base station is changed), for example, the mobile relay is handed over from the first access network device to the second access network device, in other words, the mobile relay is handed over from a cell of the first access network device to a cell of the second access network device, for example, from the cell 2 to a cell 4, the second access network device reports third location information of the mobile relay to the core network device. Correspondingly, the core network device may receive the third location information of the mobile relay from the second access network device, where the third location information includes a TAC and/or a cell ID corresponding to the cell 4 accessed by the mobile relay.

It should be understood that the first location information, the second location information, the third location information, and the like in this embodiment of this application are used as an example for distinguishing between location information corresponding to different cells, and have similar meanings, and each refers to a TAC and/or a cell ID corresponding to a cell currently accessed by the mobile relay.

In a possible implementation, the second access network device may be triggered to report the second location information of the mobile relay to the core network device in the following manner: The second access network device receives context information of the mobile relay from the first access network device, where the context information includes location reporting information (location reporting information), for example, the identifier of the core network device. After receiving the context information of the mobile relay, the second access network device reports a TAC and/or a cell ID corresponding to a cell of an access network device currently accessed by the mobile relay.

The core network device receives the current location information of the mobile relay, and may determine whether the location of the terminal device changes. For example, the location information of the mobile relay received by the core network device from the first access network device includes the TAC and/or the cell ID corresponding to the cell 2, and the location information of the mobile relay received by the core network device from the second access network device includes the TAC and/or the cell ID corresponding to the cell 4, and the TAC and/or the cell ID corresponding to the cell 2 is different from the TAC and/or the cell ID corresponding to the cell 4. In this case, it may be determined that a location of the mobile relay changes, in other words, the location of the terminal device that moves along with the mobile relay changes.

It may be understood that the mobile relay may be handed over to another access network device based on an Xn interface or an N2 interface. The following separately describes a process of transferring the context information when the mobile relay is handed over based on the foregoing two interfaces.

In a scenario in which the mobile relay is handed over based on the Xn interface, the first access network device transfers the context information of the mobile relay to the second access network device through the Xn interface, where the context information of the mobile relay includes, for example, the identifier of the core network device, and the core network device is a core network device serving the terminal device.

In a scenario in which the mobile relay is handed over based on the N2 interface, the first access network device forwards the context information of the mobile relay to the second access network device by using the core network device, where the context information of the mobile relay includes, for example, the identifier of the core network device, and the core network device is a core network device serving the terminal device.

For example, the first access network device sends a handover required message to the AMF serving the mobile relay. The handover required message includes the context information sent by the first access network device to the second access network device. The context information may be transmitted by using a source to target transparent container (source to target transparent container). The context information further includes the location reporting information, for example, the identifier of the core network device. The AMF serving the mobile relay sends a handover request message to the second access network device, where the handover request message carries the context information sent by the first access network device to the second access network device.

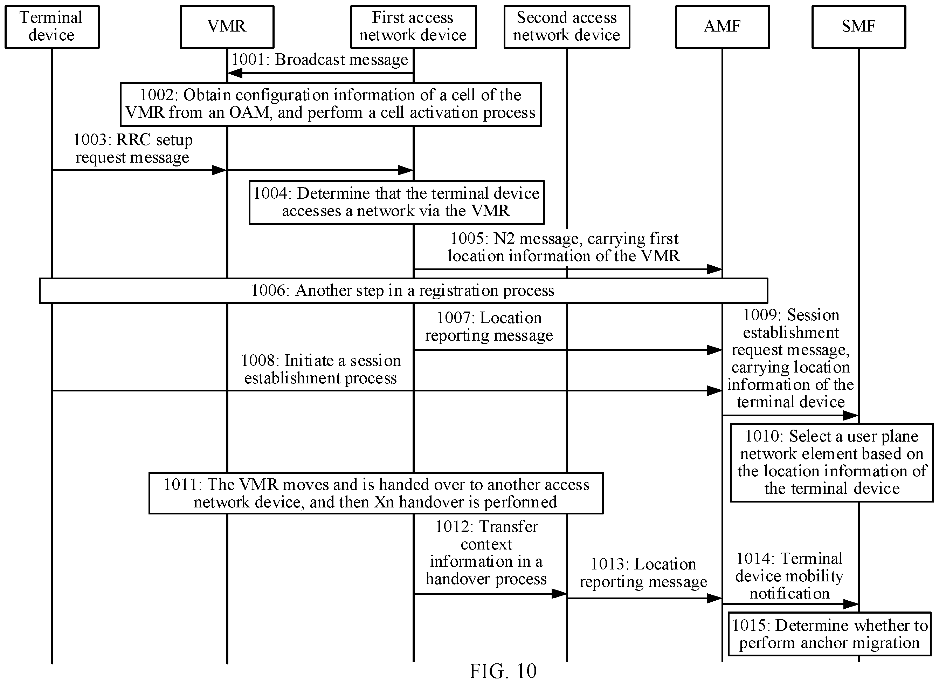

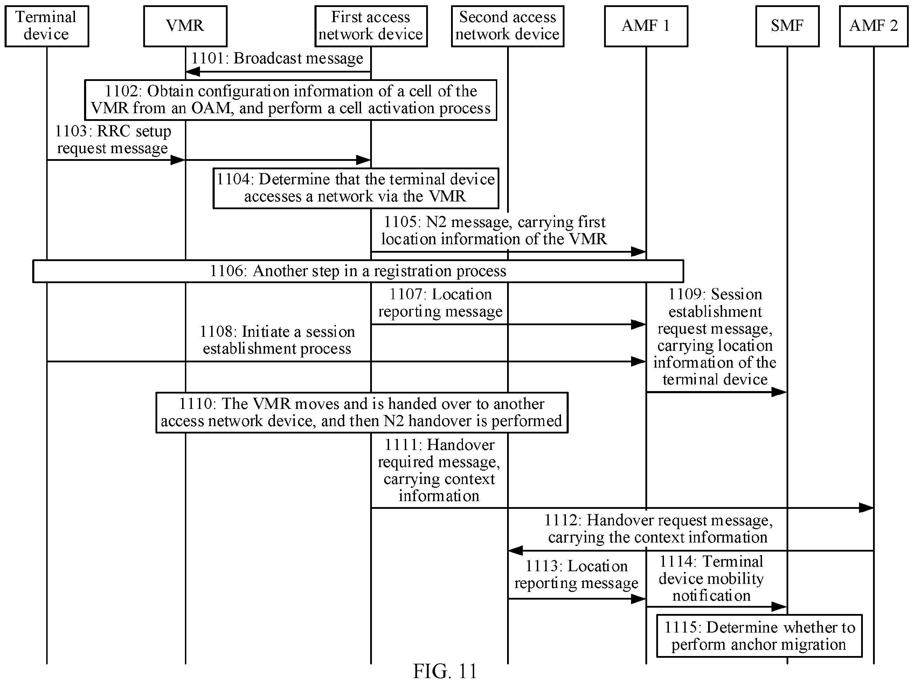

FIG. 10 and FIG. 11 show examples of the communication method in the embodiment shown in FIG. 9. A difference between embodiments shown in FIG. 10 and FIG. 11 lies in that when a mobile relay moves and is handed over to another access network device, in FIG. 10, the handover is based on an Xn interface, but in FIG. 11, the handover is based on an N2 interface.

The method shown in FIG. 10 includes step 1001 to step 1019. The following describes each step of the method shown in FIG. 10 in detail. It should be understood that in the method shown in FIG. 10, an example in which the mobile relay is a VMR, and a core network device is an AMF is used for description. The AMF is an AMF serving a terminal device.

Step 1001: A first access network device sends a broadcast message.

The broadcast message carries a TAC and/or a cell ID corresponding to a cell of the first access network device. An MT functionality of the VMR selects a cell accessed by the first access network device, and registers with a network.

Step 1002: The VMR obtains configuration information of a cell of the VMR from an OAM, and performs a cell activation process.

The configuration information of the cell of the VMR includes a TAC and/or a cell ID corresponding to the cell of the VMR. A DU functionality of the VMR sends an F1 setup request message to the first access network device, to activate the cell of the VMR. For the process, refer to a conventional technology.

After the cell of the VMR is activated, the VMR may send a broadcast message to the terminal device, where the broadcast message includes cell information of the VMR, for example, the TAC and/or the cell ID. Optionally, the broadcast message may further include indication information indicating that the cell is a cell of the mobile relay. The terminal device accesses the cell of the VMR and initiates a registration process. In other words, a cell currently accessed by the terminal device is a cell of the VMR (the cell of the VMR accessed by UE and the cell of the first access network device accessed by the VMR are different cells). It may be understood that the VMR has mobility, and the cell of the VMR is also in a moving state.

Step 1003: The terminal device sends an RRC setup request message to the first access network device. Correspondingly, the first access network device receives the RRC setup request message from the terminal device.

For a terminal device in an RRC idle (idle) state, the terminal device may send the RRC setup request message to the first access network device via the mobile relay. In other words, the terminal device expects to access the network via the mobile relay.

After receiving the RRC setup request message, the first access network device may select an AMF network element for the terminal device.

Step 1004: The first access network device determines that the terminal device accesses the network by using the VMR.

In other words, the first access network device determines that a cell (for example, a cell 1) accessed by the terminal device is a cell of the VMR.

The first access network device may determine, in any one of the following manners, that the cell 1 is a cell of the VMR.

Manner 1: The first access network device determines, based on prestored configuration information and information about a first cell, that the first cell is a cell of the mobile relay, where the information about the first cell includes a TAC and/or a cell ID corresponding to the first cell, the prestored configuration information includes cell information of the mobile relay, the cell information includes a TAC and/or a cell ID, and the cell information of the mobile relay includes the information about the first cell. In other words, the first access network device prestores the cell information of the mobile relay, including the TAC and/or the cell ID. The first access network device compares the information about the first cell with the prestored cell information of the mobile relay, and, if the information about the first cell is included in the cell information of the mobile relay, determines that the first cell is a cell of the mobile relay.

Manner 2: The first access network device receives first indication information from the VMR or the terminal device, where the first indication information indicates that the first cell is a cell having mobility, and/or the mobile relay has mobility. In an example, the terminal device may indicate, to the first access network device, that a cell accessed by the terminal device is the cell having mobility. For example, the terminal device indicates, to the first access network device in an RRC message, that the cell accessed by the terminal device is the cell having mobility. In another example, the VMR may indicate, to the first access network device, that the mobile relay has mobility. For example, an F1 setup request (F1 setup request) message sent by the VMR to the first access network device carries indication information indicating that the VMR has mobility.

It may be understood that the first access network device may further configure a reporting periodicity or reporting condition of location information of the VMR. The reporting periodicity of the location information of the VMR means how often the first access network device needs to report the location information of the VMR. The reporting condition means that when a configured reporting condition is met, the first access network device needs to report the location information of the VMR to the AMF serving the terminal device. For example, the following shows two possible reporting conditions.

Condition 1: A TAC corresponding to a cell of an access network device accessed by the VMR changes. For example, the VMR is handed over from a second cell of the first access network device to a third cell of the first access network device, and a TAC of the second cell is different from a TAC of the third cell.

Condition 2: A cell ID corresponding to a cell of an access network device accessed by the VMR changes. For example, the VMR is handed over from a second cell of the first access network device to a third cell of the first access network device, and a cell ID of the second cell is different from a cell ID of the third cell.

Step 1005: The first access network device sends an N2 message to the AMF, where the N2 message carries first location information of the VMR.

The first location information of the VMR includes a TAC and/or a cell ID corresponding to the second cell (for example, a cell 2) of the first access network device currently accessed by the VMR.

A method for how the first access network device determines the first location information may be as follows: The first access network device determines, based on locally stored context information, that a cell currently accessed by the VMR is the second cell, and further determines the TAC and/or the cell ID corresponding to the second cell.

The N2 message may further carry an identifier of the VMR, a registration request message, and the TAC and/or the cell ID corresponding to the cell of the VMR accessed by the terminal device. The identifier of the VMR is an identifier corresponding to the VMR currently accessed by the terminal device, and is used to identify a VMR.

In a possible implementation, when the first access network device receives an NAS message from the terminal device, the first access network device sends the N2 message to the AMF, where the N2 message carries the NAS message (for example, a registration request message), the TAC and/or the cell ID corresponding to the cell of the VMR currently accessed by the terminal device, and the first location information of the VMR. In other words, when receiving the NAS message of the terminal device, the first access network device may send the NAS message and the first location information of the VMR to the AMF.

In another possible implementation, if the first access network device does not receive an NAS message from the terminal device, the first access network device may also send the first location information of the VMR to the AMF. In other words, the first access network device may directly send the first location information of the VMR to the AMF without depending on whether the NAS message of the terminal device is received.

It may be understood that the N2 message may include the TAC and/or the cell ID corresponding to the cell (for example, the second cell) accessed by the VMR, and the TAC and/or the cell ID of the first cell accessed by the terminal device. To help the AMF distinguish between the TAC and/or the cell ID corresponding to the first cell and the TAC and/or the cell ID corresponding to the second cell, optionally, the N2 message may further carry indication information indicating which TAC and/or cell ID are/is a parameter of the first cell and which TAC and/or cell ID are/is a parameter of the second cell. In this way, the AMF can distinguish between a plurality of TACs and/or cell IDs carried in the N2 message.

For example, in an implementation, the N2 message carries an information element used to identify URL, where the URL is used to identify location information of the terminal device. According to the foregoing descriptions, the URL includes the TAC and/or the cell ID corresponding to the first cell. In addition, the N2 message further carries an information element used to identify VMRLI, where the VMRLI is used to identify location information of the mobile relay. According to the foregoing descriptions, the VMRLI includes the TAC and/or the cell ID corresponding to the second cell. After receiving the URL and the VMRLI, the AMF may distinguish which parameter is a parameter of the first cell (that is, a parameter included in the URL) and which TAC and/or cell ID are/is a parameter of the second cell (that is, a parameter included in the VMRLI).

In another implementation, the N2 message carries an information element used to identify user location information (URL, User Location Information), where the URL is used to identify location information of the terminal device. According to the foregoing descriptions, the URL includes the TAC and/or the cell ID corresponding to the first cell, the TAC and/or the cell ID corresponding to the second cell, and indication information. The indication information indicates that the TAC and/or the cell ID corresponding to the second cell are/is the TAC and/or the cell ID corresponding to the second cell (for example, a cell 2) of the first access network device currently accessed by the VMR currently accessed by the terminal device. After receiving the URL, the AMF may distinguish, in the URL, which parameter is a parameter of the first cell and which parameter is a parameter of the second cell.

Step 1006: For performance of another step in a registration process, refer to a conventional registration process of a terminal device. Details are not described herein again.

Step 1007: The first access network device sends a location reporting (location report) message to the AMF.

The VMR moves. For example, the MT functionality of the VMR is handed over from the second cell of the first access network device to the third cell of the first access network device, in other words, the reporting condition is met. The first access network device proactively initiates a location reporting process, and sends the current location information of the VMR to the AMF.

For example, the first access network device sends the location reporting message to the AMF, where the location reporting message carries the current location information of the VMR, and the current location information of the VMR may be represented as the TAC and/or the cell ID corresponding to the cell currently accessed by the VMR.

Step 1008: The terminal device initiates a session establishment process.

Step 1009: The AMF sends a session establishment request message to an SMF, where the session establishment request message carries the location information of the terminal device. Because the AMF has already obtained the location information of the VMR by using the first access network device, the AMF determines the location information of the terminal device based on the location information of the VMR. In an implementation, the location information of the terminal device carried in the session establishment request message may be the location information of the VMR currently accessed by the terminal device (that is, information about the cell 2). For example, the session establishment request message carries a TAI corresponding to the cell 2 of the first access network device currently accessed by the VMR.

Optionally, to help the SMF distinguish between the TAI corresponding to the cell 2 and a TAI corresponding to the cell 1, the session establishment request message may further carry indication information indicating to the SMF which TAI is a parameter of the cell 1 and which TAI is a parameter of the cell 2.

In another implementation, the location information of the terminal device carried in the session establishment request message includes the location information of the VMR currently accessed by the terminal device and information about the cell 1. For example, the session establishment request message carries a TAI corresponding to the cell 2 of the first access network device currently accessed by the VMR and the TAI corresponding to the cell 1.

Step 1010: The SMF selects a user plane network element based on the location information of the terminal device. For example, the SMF selects the user plane network element based on the TAC corresponding to the cell of the first access network device currently accessed by the VMR. For another example, the SMF selects the user plane network element based on the TAC corresponding to the cell of the first access network device currently accessed by the VMR and the TAC corresponding to the cell of the VMR accessed by the terminal device.

Step 1011: The VMR moves and is handed over to another access network device, and then Xn handover is performed.

For example, the MT functionality of the VMR is handed over from the first access network device to a second access network device. Then, the DU functionality of the VMR establishes an F1 connection to the second access network device, and the second access network device activates the cell of the VMR. That the MT functionality of the VMR is handed over from the first access network device to the second access network device may be understood as that the MT functionality of the VMR is handed over from a cell of the first access network device to a cell of the second access network device, in other words, the cell currently accessed by the VMR changes. For example, the cell currently accessed by the VMR changes from the cell 2 of the first access network device to a cell 4 of the second access network device. The TAC and/or the cell ID corresponding to the cell 2 are/is different from a TAC and/or a cell ID corresponding to the cell 4.

It should be noted that, when a cell accessed by the mobile relay changes from the second cell of the first access network device to a fourth cell of the second access network device, cell information of the mobile relay may not change. For example, a TAC corresponding to the cell 1 remains unchanged.

Step 1012: In a handover process, the first access network device transfers context information to the second access network device.

For example, the first access network device transfers the context information of the VMR to the second access network device through an Xn interface. The context information of the VMR includes location reporting information (location reporting information). The location reporting information includes one or more of the following: the identifier of the VMR, the reporting periodicity of the location information of the VMR, a location information type (for example, a TAI and/or a cell ID) of the VMR, or an identifier of the AMF. The identifier of the AMF is an identifier of the AMF serving the terminal device.

Step 1013: The second access network device sends the location reporting (location report) message to the AMF.

The location reporting message carries information about a cell of the second access network device currently accessed by the VMR, for example, a TAC and/or a cell ID.

Step 1014: The AMF sends a terminal device mobility notification to the SMF.

Because the AMF receives the location information of the VMR from the second access network device, the location information is different from the location information received from the first access network device. Considering that the terminal device moves, the AMF sends the terminal device mobility notification (UE mobility notification) to the SMF. For example, the notification may carry a TAC of a cell (for example, the cell 4) currently accessed by the VMR (the TAC corresponds to the cell of the second access network device). Optionally, the notification may further carry a TAI of the cell (for example, the cell 1) of the VMR accessed by the terminal device.

It may be understood that when the notification carries the TAI of the cell (for example, the cell 4) currently accessed by the VMR and the TAI of the cell (for example, the cell 1) of the VMR accessed by the terminal device, to help the SMF distinguish between the TAI corresponding to the cell currently accessed by the VMR and the TAI corresponding to the cell of the VMR accessed by the terminal device, the notification may further carry indication information indicating to the SMF which TAI is a parameter of the cell 1 and which TAI is a parameter of the cell 4.

Step 1015: The SMF determines whether to perform anchor migration.

For example, the SMF determines, based on a current location of the terminal device, whether the anchor migration needs to be performed. For example, if the SMF determines that, at the current location of the terminal device, a path between the previously selected anchor user plane and an N3 interface user plane of an access network device is not optimal, the SMF may choose to perform the anchor migration. Specifically, the SMF may select a local anchor for a current session, to directly route data locally. This optimizes a user plane routing path and reduces a data transmission delay.

FIG. 11 shows an example of a communication method in a scenario in which handover is performed based on an N2 interface. A difference between the embodiment shown in FIG. 11 and the embodiment shown in FIG. 10 lies in step 1110 to step 1112 in FIG. 11, and other steps are similar to those in FIG. 10. The method shown in FIG. 11 includes step 1101 to step 1115. The following describes each step of the method shown in FIG. 11 in detail. It should be understood that in the method shown in FIG. 11, an example in which the mobile relay is a VMR, and a core network device is an AMF is used for description. An AMF 1 is a core network device serving a terminal device, and an AMF 2 is a core network device serving the VMR.

Step 1101: A first access network device sends a broadcast message.

Step 1102: The VMR obtains configuration information of a cell of the VMR from an OAM, and performs a cell activation process.

Step 1103: The terminal device sends an RRC setup request message to the first access network device. Correspondingly, the first access network device receives the RRC setup request message from the terminal device.

Step 1104: The first access network device determines that the terminal device accesses a network via the VMR.

In other words, the first access network device determines that a cell (for example, a cell 1) accessed by the terminal device is a cell of the VMR.

Step 1105: The first access network device sends an N2 message to the AMF 1, where the N2 message carries first location information of the VMR.

A method for how the first access network device determines the first location information may be as follows: The first access network device determines, based on locally stored context information, that a cell currently accessed by the mobile relay is a second cell, and further determines a TAC and/or a cell ID corresponding to the second cell.

Step 1106: For performance of another step in a registration process, refer to a conventional registration process of a terminal device. Details are not described herein again.

Step 1107: The first access network device sends a location reporting (location report) message to the AMF 1.

The VMR moves. For example, an MT functionality of the VMR is handed over from the second cell of the first access network device to a third cell of the first access network device, in other words, a reporting condition is met. The first access network device proactively initiates a location reporting process, and sends current location information of the VMR to the AMF 1.

It should be noted that, when a cell accessed by the mobile relay changes from the second cell of the first access network device to the third cell of the first access network device, cell information of the mobile relay may not change. For example, a TAC corresponding to the cell 1 remains unchanged.

Step 1108: The terminal device initiates a session establishment process.

Step 1109: The AMF 1 sends a session establishment request message to an SMF, where the session establishment request message carries location information of the terminal device.

It should be noted that, for a specific process of step 1101 to step 1109, refer to the descriptions in FIG. 10. Details are not described herein again.

Step 1110: The VMR moves and is handed over to another access network device, and then N2 handover is performed.

For example, the MT functionality of the VMR is handed over from the first access network device to a second access network device. Then, a DU functionality of the VMR establishes an F1 connection to the second access network device, and the second access network device activates the cell of the VMR. That the MT functionality of the VMR is handed over from the first access network device to the second access network device may be understood as that the MT functionality of the VMR is handed over from a cell of the first access network device to a cell of the second access network device, in other words, the cell currently accessed by the VMR changes. For example, the cell currently accessed by the VMR changes from a cell 2 of the first access network device to a cell 4 of the second access network device. A TAC and/or a cell ID corresponding to the cell 2 are/is different from a TAC and/or a cell ID corresponding to the cell 4.

Step 1111: In a handover process, the first access network device sends a handover required message to the AMF 2, where the handover required message carries context information.

For example, the first access network device sends the handover required (Handover Required) message to the AMF 2 serving the VMR. The handover required message includes the context information sent by the first access network device to the second access network device. The context information may be transmitted by using a source to target transparent container (source to target transparent container). The context information further includes location reporting information (location reporting information), for example, an identifier of the AMF 1.

Step 1112: The AMF 2 sends a handover request message to the second access network device, where the handover request message carries the context information.

Step 1113: The second access network device sends the location reporting (location report) message to the AMF 1.

Step 1114: The AMF 1 sends a terminal device mobility notification to the SMF.

Step 1115: The SMF determines whether to perform anchor migration.

For specific descriptions of step 1113 and step 1115, refer to the embodiment shown in FIG. 10. Details are not described herein again.

Based on the foregoing technical solution, after determining that a cell accessed by the terminal device is a cell of the mobile relay, the first access network device proactively reports current location information of the mobile relay to the core network device serving the terminal device, so that the core network device determines the location information of the terminal device based on the current location information of the mobile relay, where the location information includes a TAC and/or a cell ID corresponding to a cell of the first access network device currently accessed by the mobile relay. The first access network device proactively reports the location information of the mobile relay, so that the core network device may determine the location information of the terminal device based on the location information of the mobile relay. This application provides a method for obtaining the location information of the terminal device in a scenario in which the terminal device accessing the mobile relay moves, to resolve a problem that cell information of the mobile relay accessed by the terminal device does not match a current actual location of the terminal device. In other words, although the cell information of the mobile relay cannot reflect the actual location information of the terminal device, the core network device can also accurately determine the actual location of the terminal device.

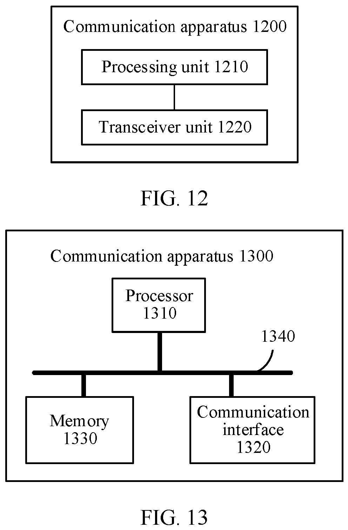

FIG. 12 to FIG. 14 are schematics of structures of possible communication apparatuses according to embodiments of this application.

FIG. 12 is a block diagram of a communication apparatus 1200 according to an embodiment of this application.

As shown in FIG. 12, the communication apparatus 1200 includes a processing unit 1210 and a transceiver unit 1220.

The apparatus 1200 may be configured to implement a function of the core network device in the foregoing method embodiments, or the apparatus 1200 may include a module configured to implement any function or operation of the core network device in the foregoing method embodiments. The module may be wholly or partially implemented by using software, hardware, firmware, or any combination thereof. The apparatus 1200 may be configured to implement a function of the access network device (for example, the first access network device) in the foregoing method embodiments, or the apparatus 1200 may include a module configured to implement any function or operation of the access network device in the foregoing method embodiments. The module may be wholly or partially implemented by using software, hardware, firmware, or any combination thereof.

For example, when the apparatus 1200 is configured to implement the function of the core network device in the method embodiment shown in FIG. 6, the processing unit 1210 is configured to determine that a first cell accessed by a terminal device is a cell of a mobile relay; and the transceiver unit 1820 may be configured to send a first message to the first access network device, where the first message carries first information, the first message is used to request the first access network device to report location information of the mobile relay, the first information is used by the first access network device to determine the mobile relay, and the mobile relay is configured to provide a relay service between the terminal device and the first access network device. The transceiver unit 1820 is further configured to receive first location information of the mobile relay from the first access network device, where the first location information includes a TAC and/or a cell ID corresponding to a second cell currently accessed by the mobile relay, and the second cell is a cell of the first access network device. The processing unit 1210 is further configured to determine location information of the terminal device based on the first location information of the mobile relay.

For example, when the apparatus 1200 is configured to implement the function of the access network device (for example, the first access network device) in the method embodiment shown in FIG. 6, the transceiver unit 1220 may be configured to: receive a first message from the core network device, where the core network device serves a terminal device, the first message carries first information, the first message is used to request the first access network device to report location information of a mobile relay, the first information is used by the first access network device to determine the mobile relay, the location information of the mobile relay is used by the core network device to determine location information of the terminal device, and the mobile relay is configured to provide a relay service between the terminal device and the first access network device; and send first location information of the mobile relay to the core network device based on the first message, where the first location information includes a TAC and/or a cell ID corresponding to a second cell currently accessed by the mobile relay, and the second cell is a cell of the first access network device.

For example, when the apparatus 1200 is configured to implement the function of the access network device (for example, the first access network device) in the method embodiment shown in FIG. 9, the processing unit 1210 is configured to determine that a first cell accessed by a terminal device is a cell of a mobile relay; and the transceiver unit 1220 may be configured to send first location information of the mobile relay to the core network device serving the terminal device, where the first location information includes a TAC and/or a cell ID corresponding to a second cell currently accessed by the mobile relay, the first location information of the mobile relay is used by the core network device to determine location information of the terminal device, the mobile relay is configured to provide a relay service between the terminal device and the first access network device, and the second cell is a cell of the first access network device.

For example, when the apparatus 1200 is configured to implement the function of the core network device in the method embodiment shown in FIG. 9, the transceiver unit 1220 is configured to receive first location information of a mobile relay from the first access network device, where the first location information includes a TAC and/or a cell ID corresponding to a second cell currently accessed by the mobile relay, the second cell is a cell of the first access network device, the mobile relay is configured to provide a relay service between a terminal device and the first access network device, and a first cell accessed by the terminal device is a cell of the mobile relay; and the processing unit 1210 is configured to determine location information of the terminal device based on the first location information of the mobile relay.

For more detailed descriptions of the processing unit 1210 and the transceiver unit 1220, directly refer to related descriptions in the foregoing method embodiments. Details are not described herein again.

It should be understood that in embodiments of this application, division into the units is an example, and is merely logical function division. There may be another division manner in actual implementation. In addition, functional units in embodiments of this application may be integrated into one processor, or each of the units may exist alone physically, or two or more units are integrated into one unit. The integrated unit may be implemented in a form of hardware, or may be implemented in a form of a software functional unit.

FIG. 13 is a block diagram of a communication apparatus 1300 according to an embodiment of this application. The apparatus 1300 may be a chip system, or may be an apparatus in which the chip system is disposed, to implement a communication function in the foregoing method embodiments. In this embodiment of this application, the chip system may include a chip, or may include a chip and another discrete component.

As shown in FIG. 13, the apparatus 1300 may include a processor 1310 and a communication interface 1320. The communication interface 1320 is configured to communicate with another device through a transmission medium, so that the apparatus 1300 may communicate with the another device. The communication interface 1320 may be, for example, a transceiver, an interface, a bus, a circuit, or an apparatus that can implement a transceiver function. The processor 1310 may input and output data through the communication interface 1320, and is configured to implement the method in any one of the embodiments corresponding to FIG. 6 to FIG. 11. Specifically, the apparatus 1300 may be configured to implement a function of the access network device or the core network device in the foregoing method embodiments.

When the apparatus 1300 is configured to implement the method in any one of the embodiments corresponding to FIG. 6 to FIG. 11, the processor 1310 is configured to implement a function of the processing unit 1210, and the communication interface 1320 is configured to implement a function of the transceiver unit 1220.

Optionally, the apparatus 1300 further includes at least one memory 1330, configured to store program instructions and/or data. The memory 1330 is coupled to the processor 1310. The coupling in this embodiment of this application may be an indirect coupling or a communication connection between apparatuses, units, or modules in an electrical form, a mechanical form, or another form, and is used for information exchange between the apparatuses, the units, or the modules. The processor 1310 may cooperate with the memory 1330. The processor 1310 may execute the program instructions stored in the memory 1330. At least one of the at least one memory may be included in the processor.

In this embodiment of this application, a specific connection medium among the processor 1310, the communication interface 1320, and the memory 1330 is not limited. In this embodiment of this application, in FIG. 13, the processor 1310, the communication interface 1320, and the memory 1330 are connected through a bus 1340. The bus 1340 is represented by a bold line in FIG. 13, and a manner of connection between other components is merely described as an example, and is not limited thereto. The bus may be classified into an address bus, a data bus, a control bus, and the like. For ease of representation, only one bold line is used to represent the bus in FIG. 13, but this does not mean that there is only one bus or only one type of bus.

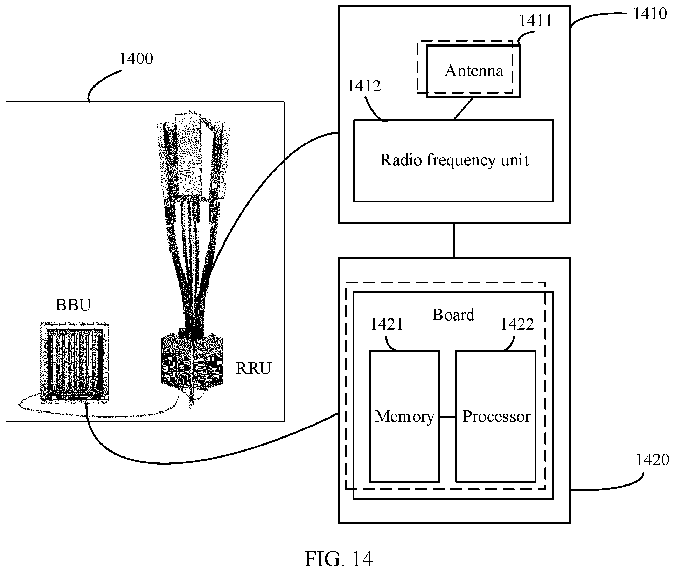

FIG. 14 is a diagram of a structure of an access network device according to an embodiment of this application, for example, may be a diagram of a structure of a base station. A base station 1400 may perform a function of the access network device in the foregoing method embodiments. As shown in FIG. 14, the base station 1400 may include one or more radio frequency units, such as a remote radio unit (remote radio unit, RRU) 1410 and one or more baseband units (BBUs) (which may also be referred to as a distributed unit (DU)) 1420. The RRU 1410 may be referred to as a transceiver unit, and corresponds to the transceiver unit 1220 in FIG. 12. Optionally, the RRU 1410 may also be referred to as a transceiver machine, a transceiver circuit, a transceiver, or the like, and may include at least one antenna 1411 and a radio frequency unit 1412. Optionally, the RRU 1410 may include a receiving unit and a sending unit. The receiving unit may correspond to a receiver (or referred to as a receiving machine or a receiving circuit), and the sending unit may correspond to a transmitter (or referred to as a transmitting machine or a transmitting circuit). The RRU 1410 is mainly configured to: receive and send a radio frequency signal, and perform conversion between the radio frequency signal and a baseband signal. For example, the RRU 1410 is configured to send configuration information to a terminal device. The BBU 1420 is mainly configured to perform baseband processing, control a base station, and the like. The RRU 1410 and the BBU 1420 may be physically disposed together, or may be physically disposed separately, that is, in a distributed base station.

The BBU 1420 is a control center of the base station, or may be referred to as a processing unit. The BBU 1420 may correspond to the processing unit 1210 in FIG. 12, and is mainly configured to implement a baseband processing function, for example, channel coding, multiplexing, modulation, or spreading. For example, the BBU (the processing unit) may be configured to control the base station to perform operation processes related to the access network device in the foregoing method embodiment.

In an example, the BBU 1420 may include one or more boards, and a plurality of boards may jointly support a radio access network (such as an LTE network) of a single access standard, or may separately support radio access networks (such as an LTE network, a 5G network, or another network) of different access standards. The BBU 1420 further includes a memory 1421 and a processor 1422. The memory 1421 is configured to store necessary instructions and data. The processor 1422 is configured to control the base station to perform a necessary action, for example, configured to control the base station to perform an operation process related to the access network device in the foregoing method embodiments. The memory 1421 and the processor 1422 may serve one or more boards. In other words, a memory and a processor may be separately disposed on each board. Alternatively, a plurality of boards may share a same memory and a same processor. In addition, a necessary circuit may further be disposed on each board.

It should be understood that the base station 1400 shown in FIG. 14 can implement processes related to the access network device in the foregoing method embodiments. Operations and/or functions of the modules in the base station 1400 are intended to implement corresponding processes in the foregoing method embodiments. For details, refer to the descriptions in the foregoing method embodiments. To avoid repetition, detailed descriptions are properly omitted herein.

This application further provides a computer program product. The computer program product includes a computer program (which may also be referred to as code or instructions). When the computer program is run, a computer is enabled to perform the method in any one of the embodiments corresponding to FIG. 6 to FIG. 11.

This application further provides a computer-readable storage medium. The computer-readable storage medium stores a computer program (which may also be referred to as code or instructions). When the computer program is run, a computer is enabled to perform the method in any one of the embodiments corresponding to FIG. 6 to FIG. 11.

An embodiment of this application provides a communication system. The system includes the access network device and the core network device described above.

It should be understood that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, any conventional processor, or the like. Steps of the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory. The processor reads information in the memory and completes the steps of the foregoing methods in combination with hardware of the processor.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and methods described in this specification includes but is not limited to these memories and any memory of another proper type.

Terms such as "unit" and "module" used in this specification may indicate computer-related entities, hardware, firmware, a combination of hardware and software, software, or software being executed. The units and modules in embodiments of this application have the same meaning, and may be used interchangeably.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in another manner. For example, the described apparatus embodiment is merely an example. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Apart or all of the units may be selected based an actual requirement to achieve the objectives of the solutions of embodiments.

In addition, functional units in embodiments of this application may be integrated into one processing unit, each of the units may exist alone physically, or two or more units are integrated into one unit.

In the foregoing embodiments, the functions of the functional units may be wholly or partially implemented by using software, hardware, firmware, or any combination thereof. When the software is used to implement the functions, the functions may be wholly or partially implemented in a form of a computer program product. The computer program product includes one or more computer instructions (programs). When the computer program instructions (programs) are loaded and executed on a computer, the processes or functions according to embodiments of this application are wholly or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), or an optical medium (for example, a digital video disc (digital video disc, DVD)), a semiconductor medium (for example, a solid-state disk (solid-state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a core network device, wherein the core network device serves a terminal device, and the method comprises:
determining that a first cell accessed by the terminal device is a cell of a mobile relay;
sending a first message to a first access network device, wherein the first message carries first information, the first message is used to request the first access network device to report location information of the mobile relay, the first information is used by the first access network device to determine the mobile relay, and the mobile relay is configured to provide a relay service between the terminal device and the first access network device;
receiving first location information of the mobile relay from the first access network device, wherein the first location information comprises a tracking area code TAC and/or a cell identifier cell ID corresponding to a second cell currently accessed by the mobile relay, and the second cell is a cell of the first access network device; and
determining location information of the terminal device based on the first location information of the mobile relay.

2. The method according to claim 1, wherein the first information comprises one or more of the following:
an identifier of the mobile relay;
a TAC corresponding to the first cell; or
a cell ID of the first cell.

3. The method according to claim 1 or 2, wherein the determining that a first cell accessed by the terminal device is a cell of a mobile relay comprises:
receiving information about the first cell from the first access network device, wherein the information about the first cell comprises a TAC and/or a cell ID corresponding to the first cell; and
determining, based on prestored configuration information and the information about the first cell, that the first cell is a cell of the mobile relay, wherein the configuration information comprises cell information of a mobile relay, the cell information comprises a TAC and/or a cell ID, and the cell information of the mobile relay comprises the information about the first cell.

4. The method according to claim 1 or 2, wherein the determining that a first cell accessed by the terminal device is a cell of a mobile relay comprises:
receiving second information from the first access network device or the terminal device, wherein the second information indicates that a cell accessed by the terminal device is a cell of a mobile relay.

5. The method according to any one of claims 1 to 4, wherein the first message further carries one or more of the following: a reporting periodicity of the location information of the mobile relay, a location information type of the mobile relay, or an identifier of the core network device, and the location information type of the mobile relay comprises a TAC and/or a cell ID of a cell accessed by the mobile relay.

6. The method according to any one of claims 1 to 5, wherein the method further comprises:
receiving second location information of the mobile relay from a second access network device, wherein the second location information comprises a TAC and/or a cell ID corresponding to a third cell accessed by the mobile relay, and the third cell is a cell of the second access network device; and
determining, based on the received second location information, that a location of the terminal device changes.

7. A communication method, applied to a first access network device, wherein the method comprises:
receiving a first message from a core network device, wherein the core network device serves a terminal device, the first message carries first information, the first message is used to request the first access network device to report location information of a mobile relay, the first information is used by the first access network device to determine the mobile relay, the location information of the mobile relay is used by the core network device to determine location information of the terminal device, and the mobile relay is configured to provide a relay service between the terminal device and the first access network device; and
sending first location information of the mobile relay to the core network device based on the first message, wherein the first location information comprises a tracking area code TAC and/or a cell identifier cell ID corresponding to a second cell currently accessed by the mobile relay, and the second cell is a cell of the first access network device.

8. The method according to claim 7, wherein the first information comprises one or more of the following:
an identifier of the mobile relay;
a TAC corresponding to a first cell, wherein the first cell is a cell of the mobile relay accessed by the terminal device; and
a cell ID of the first cell.

9. The method according to claim 7 or 8, wherein the first message further carries one or more of the following: a reporting periodicity of the location information of the mobile relay, a location information type of the mobile relay, or an identifier of the core network device, and the location information type of the mobile relay comprises a TAC and/or a cell ID of a cell accessed by the mobile relay.

10. The method according to claim 9, wherein the method further comprises:
sending context information of the mobile relay to a second access network device, wherein the second access network device is an access network device after the mobile relay is handed over, and the context information of the mobile relay comprises the identifier of the core network device.

11. A communication method, applied to a first access network device, wherein the method comprises:
determining that a first cell accessed by a terminal device is a cell of a mobile relay; and
sending first location information of the mobile relay to a core network device serving the terminal device, wherein the first location information comprises a tracking area code TAC and/or a cell identifier cell ID corresponding to a second cell currently accessed by the mobile relay, the first location information of the mobile relay is used by the core network device to determine location information of the terminal device, the mobile relay is configured to provide a relay service between the terminal device and the first access network device, and the second cell is a cell of the first access network device.

12. The method according to claim 11, wherein the determining that a first cell accessed by a terminal device is a cell of a mobile relay comprises:
determining, based on prestored configuration information and information about the first cell, that the first cell is a cell of the mobile relay, wherein the information about the first cell comprises a TAC and/or a cell ID corresponding to the first cell, the configuration information comprises cell information of the mobile relay, the cell information comprises a TAC and/or a cell ID, and the cell information of the mobile relay comprises the information about the first cell.

13. The method according to claim 11, wherein the determining that a first cell accessed by a terminal device is a cell of a mobile relay comprises:
receiving first indication information from the mobile relay or the terminal device, wherein the first indication information indicates that the first cell is a cell having mobility, and/or the mobile relay has mobility.

14. The method according to any one of claims 11 to 13, wherein the method further comprises:
determining a reporting periodicity and/or a reporting condition of location information of the mobile relay, wherein the reporting condition comprises that a cell accessed by the mobile relay changes from the second cell to a third cell, the second cell and the third cell are cells of the first access network device, and the TAC and/or the cell ID of the second cell are/is different from a TAC and/or a cell ID of the third cell.

15. The method according to claim 14, wherein when the cell accessed by the mobile relay changes from the second cell to the third cell, the method further comprises:
sending the TAC and/or the cell ID corresponding to the third cell to the core network device.

16. The method according to any one of claims 11 to 15, wherein the sending first location information of the mobile relay to a core network device serving the terminal device comprises:
sending an N2 message to the core network device, wherein the N2 message comprises the first location information.

17. The method according to claim 16, wherein the N2 message further comprises one or more of the following:
a TAC corresponding to the first cell;
a cell ID of the first cell; or
an NAS message of the terminal device.

18. The method according to any one of claims 11 to 17, wherein the method further comprises:
sending context information of the mobile relay to a second access network device, wherein the second access network device is an access network device after the mobile relay is handed over, and the context information of the mobile relay comprises an identifier of the core network device.

19. A communication method, applied to a core network device, wherein the core network device serves a terminal device, and the method comprises:
receiving first location information of a mobile relay from a first access network device, wherein the first location information comprises a tracking area code TAC and/or a cell identifier cell ID corresponding to a second cell currently accessed by the mobile relay, the second cell is a cell of the first access network device, the mobile relay is configured to provide a relay service between the terminal device and the first access network device, and a first cell accessed by the terminal device is a cell of the mobile relay; and
determining location information of the terminal device based on the first location information of the mobile relay.

20. The method according to claim 19, wherein the method further comprises:
receiving an N2 message from the first access network device, wherein the N2 message comprises the first location information of the mobile relay.

21. The method according to claim 20, wherein the N2 message further comprises one or more of the following:
a TAC corresponding to the first cell;
a cell ID of the first cell; or
an NAS message of the terminal device.

22. The method according to claim 19 or 21, wherein the method further comprises:
receiving second location information of the mobile relay from the first access network device, wherein the second location information comprises a TAC and/or a cell ID corresponding to a third cell currently accessed by the mobile relay, the third cell and the second cell are cells of the first access network device, and the TAC and/or the cell ID of the third cell are/is different from the TAC and/or the cell ID of the second cell.

23. The method according to any one of claims 19 to 22, wherein the method further comprises:
receiving third location information of the mobile relay from a second access network device, wherein the third location information comprises a TAC and/or a cell ID corresponding to a fourth cell currently accessed by the mobile relay, and the fourth cell is a cell of the second access network device.

24. A communication apparatus, comprising a unit configured to implement the method according to any one of claims 1 to 6, a unit configured to implement the method according to any one of claims 7 to 10, a unit configured to implement the method according to any one of claims 11 to 18, or a unit configured to implement the method according to any one of claims 19 to 23.

25. A communication apparatus, comprising a processor and a memory, wherein the processor is coupled to the memory, and the processor is configured to control the apparatus to implement the method according to any one of claims 1 to 6, implement the method according to any one of claims 7 to 10, implement the method according to any one of claims 11 to 18, or implement the method according to any one of claims 19 to 23.

26. A computer-readable storage medium, wherein the storage medium stores a computer program or instructions; and when the computer program or the instructions are executed by a computer, the method according to any one of claims 1 to 6 is implemented, the method according to any one of claims 7 to 10 is implemented, the method according to any one of claims 11 to 18 is implemented, or the method according to any one of claims 19 to 23 is implemented.

27. A computer program product, wherein the computer program product comprises instructions; and when the instructions are executed by a computer, the method according to any one of claims 1 to 6 is implemented, the method according to any one of claims 7 to 10 is implemented, the method according to any one of claims 11 to 18 is implemented, or the method according to any one of claims 19 to 23 is implemented.
